(19) Europäisches Patentamt
European Patent Office
Office européen des brevets

(11) **EP 4 583 607 A1**

(12) **EUROPEAN PATENT APPLICATION**
published in accordance with Art. 153(4) EPC

(43) Date of publication:
**09.07.2025 Bulletin 2025/28**

(21) Application number: **23887863.1**

(22) Date of filing: **31.10.2023**

(51) International Patent Classification (IPC):
**H04W 72/0446** (2023.01)

(52) Cooperative Patent Classification (CPC):
**H04L 5/00; H04W 28/26; H04W 72/0446;
H04W 72/0453; H04W 72/21; H04W 72/23;
H04W 72/53**

(86) International application number:
**PCT/CN2023/128323**

(87) International publication number:
**WO 2024/099173 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.11.2022 CN 202211400750
19.12.2022 CN 202211630768**

(71) Applicant: **Huawei Technologies Co., Ltd.
Shenzhen, Guangdong 518129 (CN)**

(72) Inventors:
• **WANG, Bichai
Shenzhen, Guangdong 518129 (CN)**
• **LI, Xueru
Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD AND APPARATUS**

(57) This application relates to a communication method and apparatus. A terminal device determines configuration information used to configure a first resource pool. The first resource pool includes M1 first-type time domain units and M2 second-type time domain units, each of the M1 first-type time domain units corresponds to N1 first-type frequency domain units in the first resource pool, each of the M2 second-type time domain units corresponds to N2 second-type frequency domain units in the first resource pool, a bandwidth of each first-type frequency domain unit is the same as a bandwidth of each second-type frequency domain unit, and N2 is greater than N1. The first resource pool may include different quantities of frequency domain units in different types of time domain units. For example, the first resource pool may include all available frequency domain resources in a UL slot, and may also include all available frequency domain resources in an SBFD slot. This reduces a waste of resources and improves resource utilization.

[FIG. 4]

**Description**

CROSS-REFERENCE TO RELATED APPLICATIONS

This application claims priorities to Chinese Patent Application No. 202211400750.9, filed with the China National Intellectual Property Administration on November 9, 2022, and entitled "RESOURCE CONFIGURATION METHOD AND COMMUNICATION APPARATUS", and to Chinese Patent Application No. 202211630768.8, filed with the China National Intellectual Property Administration on December 19, 2022, and entitled "COMMUNICATION METHOD AND APPARATUS", both of which are incorporated herein by reference in their entireties.

TECHNICAL FIELD

This application relates to the field of communication technologies, and in particular, to a communication method and apparatus.

BACKGROUND

When sidelink (sidelink, SL) communication is performed in a licensed spectrum, an existing standard supports allocating a resource used for uplink (uplink, UL) transmission in a cellular network to SL communication, to avoid interference to downlink reception of nearby user equipment (user equipment, UE). Therefore, in time division duplex (time division duplex, TDD) mode of the cellular network, a UL slot (slot) can be used for SL communication.
In addition, in the cellular network, to reduce an uplink transmission latency, the existing standard is considering use of a subband full-duplex (subband full-duplex, SBFD) mode on a network side. An SBFD slot includes a downlink subband (subband) and an uplink subband, and a network device may simultaneously perform downlink sending and uplink receiving. Compared with a TDD system, the SBFD mode can reduce an uplink transmission latency.
In the SBFD mode of the cellular network, in addition to a UL slot, the uplink subband in the SBFD slot may also be considered for SL communication, to reduce an SL transmission latency. However, in an existing SL resource pool configuration manner, sizes of frequency domain resources in all slots in a resource pool need to be the same. Therefore, if the resource pool includes both an uplink subband in the UL slot and the uplink subband in the SBFD slot, a size of a frequency domain resource in the resource pool cannot exceed a size of the uplink subband in the SBFD slot. Consequently, a frequency domain resource in the UL slot cannot be fully used, and a waste of resources is caused.

SUMMARY

Embodiments of this application provide a communication method and apparatus, to improve resource utilization.
According to a first aspect, a first communication method is provided. The method may be performed by a terminal device, may be performed by another device including a function of the terminal device, or may be performed by a chip system (or a chip) or another functional module. The chip system or the functional module can implement the function of the terminal device, and the chip system or the functional module is, for example, disposed in the terminal device. The method includes: determining configuration information, where the configuration information is used to configure a first resource pool, the first resource pool is used for information transmission between the terminal device and another terminal device, the first resource pool includes M1 first-type time domain units and M2 second-type time domain units, both M1 and M2 are positive integers, each of the M1 first-type time domain units corresponds to N1 first-type frequency domain units in the first resource pool, each of the M2 second-type time domain units corresponds to N2 second-type frequency domain units in the first resource pool, both N1 and N2 are positive integers, a bandwidth of each first-type frequency domain unit is the same as a bandwidth of each second-type frequency domain unit, and N2 is greater than N1.
In this embodiment of this application, the first-type time domain unit included in the first resource pool may correspond to the N1 first-type frequency domain units, and the second-type time domain unit may correspond to the N2 second-type frequency domain units. Values of N1 and N2 are not limited. For example, N1 and N2 may be different. In other words, in the time domain units included in the first resource pool, the first resource pool may include different quantities of frequency domain units in different types of time domain units. For example, the first resource pool may include all available frequency domain resources in a UL slot, and may also include all available frequency domain resources in an SBFD slot. This reduces a waste of resources and improves resource utilization.
In an optional implementation, the configuration information includes one or more of the following: information about an index set of the M1 first-type time domain units; information about an index set of the M2 second-type time domain units; frequency domain location information of the N1 first-type frequency domain units; frequency domain location information of the N2 second-type frequency domain units; a value of N1; a value of N2; or a quantity of PRBs included in each first-type frequency domain unit or each second-type frequency domain unit. The configuration information may be used to configure the first resource pool by configuring one or more of the foregoing parameters. In addition to the foregoing parameters, the configuration information may further include another parameter. This is not limited.

In an optional implementation, the determining configuration information includes: receiving the configuration information from a network device; or determining the preconfigured configuration information. For example, the configuration information may be sent by the network device, and the network device may send the configuration information in a broadcast or unicast manner. Alternatively, the configuration information may be preconfigured in the terminal device, for example, preconfigured when the terminal device is delivered from a factory. Alternatively, the configuration information may be configured by a higher layer (for example, an RRC layer or another protocol layer) of the terminal device.

In an optional implementation, the method further includes: sending or receiving side control information in a first time domain unit in the first resource pool, where the side control information includes a frequency resource indicator value, the frequency resource indicator value indicates a frequency domain unit occupied by a reserved resource in K time domain units, a quantity of bits occupied by the frequency resource indicator value is determined based on a first parameter, and K is a positive integer. The side control information may indicate a reserved resource of first data, and the reserved resource is a transmission resource reserved for the first data. Therefore, when selecting a resource, a terminal device that receives the side control information may perform interference avoidance based on the reserved resource. For example, an optional manner in which the side control information indicates the reserved resource is that the side control information may indicate location information of the frequency domain unit occupied by the reserved resource in the K time domain units, or indicate the frequency domain unit occupied by the reserved resource in the K time domain units.

In an optional implementation, the first parameter is N2. In this implementation, regardless of whether a time domain unit in which the reserved resource in a resource reservation period is located includes only the second-type time domain unit, or includes only the first-type time domain unit, or includes both the first-type time domain unit and the second-type time domain unit, the frequency resource indicator value may indicate a frequency domain unit reserved for the first data in the resource reservation period. A receiving end of the side control information may determine the value of the first parameter based on N2, to determine the quantity of bits of the frequency resource indicator value. This implementation is simple.

In an optional implementation, if the first time domain unit belongs to the M1 first-type time domain units, the first parameter is N1; or if the first time domain unit belongs to the M2 second-type time domain units, the first parameter is N2. Compared with an implementation in which the first parameter is always N2, in this optional implementation, if the side control information is sent in the first-type time domain unit, a value of the first parameter is N1. Therefore, the quantity of bits occupied by the frequency resource indicator value is small, and transmission overheads can be reduced.

In an optional implementation, the first time domain unit belongs to the M1 first-type time domain units, the K time domain units include a second time domain unit, the second time domain unit belongs to the M2 second-type time domain units, the side control information further indicates information about a first frequency domain unit set occupied by the reserved resource in the second time domain unit, the N2 second-type frequency domain units are divided into at least two frequency domain unit sets, each frequency domain unit set includes one or more second-type frequency domain units, and the first frequency domain unit set is one of the at least two frequency domain unit sets. If the first time domain unit is the first-type time domain unit, the quantity of bits of the frequency resource indicator value is determined based on N1. In this case, if the K time domain units include the second-type time domain unit, the frequency resource indicator value cannot indicate an additional frequency domain unit (that is, an additional frequency domain unit relative to a frequency domain unit corresponding to the first-type time domain unit) occupied by the reserved resource in the second-type time domain unit. Therefore, the side control information may further indicate the frequency domain unit set occupied by the reserved resource in the second time domain unit, so that the receiving end of the side control information can determine, based on the frequency resource indicator value and the frequency domain unit set occupied by the reserved resource in the second time domain unit, the frequency domain unit occupied by the reserved resource in the K time domain units.

In an optional implementation, the method further includes: sending or receiving side control information in a first time domain unit in the first resource pool, where the side control information includes K pieces of first indication information, K is a positive integer, and the K pieces of first indication information indicate a frequency domain unit occupied by a reserved resource in K time domain units. Optionally, each of the K pieces of first indication information is a bitmap. As described above, the side control information may indicate, by using the frequency resource indicator value, the frequency domain unit occupied by the reserved resource in the K time domain units. In addition, the side control information may further indicate, by using the first indication information, the frequency domain unit occupied by the reserved resource in the K time domain units. For example, the K pieces of first indication information exist independently and do not interfere with each other, and each indicates a frequency domain unit occupied by the reserved resource in a time domain unit. Therefore, the side control information can also indicate the frequency domain unit occupied by the reserved resource in the K time domain units. Optionally, each of the K pieces of first indication information may be implemented by a bitmap. A quantity of bits of one bitmap may be the same as a quantity of frequency domain units corresponding to a time domain unit indicated by the bitmap, so that one bit in the bitmap may indicate one frequency domain unit corresponding to the time domain unit. Compared with indication by using the frequency resource indicator value, indication by using the first indication information is more flexible.

In an optional implementation, the method further includes: sending or receiving first data in a first frequency domain unit in a third time domain unit, where a fourth time domain unit includes H1 feedback resource unit sets used to send or receive feedback information, the H1 feedback resource unit sets are in one-to-one correspondence with frequency domain units in L1 time domain units, the third time domain unit belongs to the L1 time domain units, the first frequency domain unit in the third time domain unit corresponds to a first feedback resource unit set in the H1 feedback resource unit sets, and both H1 and L1 are positive integers; and determining a first feedback resource unit from the first feedback resource unit set, where the first feedback resource unit is used to receive or send feedback information of the first data. After receiving at least one TB corresponding to the first data, a receiving end may send feedback information through a PSFCH. The feedback information is, for example, a HARQ feedback, such as an ACK or a NACK, to indicate that the at least one TB corresponding to the first data is successfully received or fails to be received. Therefore, both a transmitting end and the receiving end of the first data may determine the feedback resource unit used to transmit the feedback information, to send or receive the feedback information.

In an optional implementation, the L1 time domain units include none of the M2 second-type time domain units; or the L1 time domain units include at least one of the M2 second-type time domain units. H1 existing when the L1 time domain units include none of the M2 second-type time domain units is less than H1 existing when the L1 time domain units include at least one of the M2 second-type time domain units. If the L1 time domain units include the second-type time domain unit, it indicates that a feedback resource unit in the fourth time domain unit is associated with more frequency domain units. Therefore, the feedback resource unit in the fourth time domain unit may be divided into more feedback resource unit sets, to transmit feedback information corresponding to the more frequency domain units.

In an optional implementation, the determining a first feedback resource unit from the first feedback resource unit set includes: determining, based on an identifier related to the first data, one or more of an index of the first feedback resource unit, an index of a frequency domain subunit corresponding to the first feedback resource unit, a cyclic shift of a sequence corresponding to the first feedback resource unit, or an orthogonal cover code OCC corresponding to the first feedback resource unit, where the first feedback resource unit includes at least two time domain subunits in time domain. If the fourth time domain unit is associated with the second-type time domain unit, a large quantity of frequency domain units are associated with the fourth time domain unit. In other words, the feedback resource unit in the fourth time domain unit is used to transmit more feedback information. In this case, a time domain resource included in the feedback resource unit may be extended. For example, one feedback resource unit may include more than one time domain symbol. This is equivalent to enabling the feedback resource unit to include more resources in time domain, to transmit more feedback information. In this case, an optional range of the feedback information may be extended by using features of a plurality of dimensions, so that feedback information resources are more abundant.

In an optional implementation, the OCC is a Walsh code sequence or a discrete Fourier transform sequence.

In an optional implementation, the L1 time domain units include one or more of the M2 second-type time domain units, and the fourth time domain unit belongs to the M1 first-type time domain units. If the fourth time domain unit is a second-type time domain unit, the fourth time domain unit corresponds to abundant frequency domain resources, and can be used to transmit more feedback information. Therefore, in this case, even if the fourth time domain unit is associated with the second-type time domain unit, the time domain resource of the feedback resource unit may not need to be extended. Therefore, if the fourth time domain unit is associated with the second-type time domain unit, and the fourth time domain unit is the first-type time domain unit, the time domain resource of the feedback resource unit may be extended.

According to a second aspect, a second communication method is provided. The method may be performed by a terminal device, may be performed by another device including a function of the terminal device, or may be performed by a chip system (or a chip) or another functional module. The chip system or the functional module can implement the function of the terminal device, and the chip system or the functional module is, for example, disposed in the terminal device. The method includes: determining configuration information, where the configuration information is used to configure a first resource pool, the first resource pool is used for information transmission between the terminal device and another terminal device, the first resource pool includes M1 first-type time domain units and M2 second-type time domain units, both M1 and M2 are positive integers, each of the M1 first-type time domain units corresponds to N first-type frequency domain units, each of the M2 second-type time domain units corresponds to N second-type frequency domain units, N is a positive integer, and a bandwidth of each first-type frequency domain unit is less than a bandwidth of each second-type frequency domain unit.

In the time domain units included in the first resource pool, the first resource pool may include frequency domain units of different bandwidths in different types of time domain units. For example, the first resource pool may include all available frequency domain resources in a UL slot, and may also include all available frequency domain resources in an SBFD slot. This reduces a waste of resources and improves resource utilization. In addition, in this embodiment of this application, a quantity of frequency domain units corresponding to the first-type time domain unit is equal to a quantity of frequency domain units corresponding to the second-type time domain unit. Therefore, there is no need to make excessive changes to side control information, a feedback mechanism, and the like, and this can be better compatible with the conventional technology.

In an optional implementation, the configuration information includes one or more of the following: information about an index set of the M1 first-type time domain units; information about an index set of the M2 second-type time domain units; frequency domain location information of the N first-type frequency domain units; frequency domain location information of the N second-type frequency domain units; a value of N; a quantity of PRBs included in each first-type frequency domain unit; or a quantity of PRBs included in each second-type frequency domain unit. The configuration information may be used to configure the first resource pool by configuring one or more of the foregoing parameters. In addition to the foregoing parameters, the configuration information may further include another parameter. This is not limited.

In an optional implementation, the determining configuration information includes: receiving the configuration information from a network device; or determining the preconfigured configuration information. For example, the configuration information may be sent by the network device, and the network device may send the configuration information in a broadcast or unicast manner. Alternatively, the configuration information may be preconfigured in the terminal device, for example, preconfigured when the terminal device is delivered from a factory. Alternatively, the configuration information may be configured by a higher layer (for example, an RRC layer or another protocol layer) of the terminal device.

In an optional implementation, the method further includes: sending or receiving side control information, where the side control information includes a frequency resource indicator value, the frequency resource indicator value indicates a frequency domain unit occupied by a reserved resource in K time domain units, K is a positive integer, the side control information further indicates a first modulation and coding scheme MCS and a second MCS, the first MCS is applicable to a first-type time domain unit in the K time domain units, the second MCS is applicable to a second-type time domain unit in the K time domain units, and the first MCS is different from the second MCS. Because bandwidths of frequency domain units corresponding to the two types of time domain units are different, in this embodiment of this application, different MCSs may be set for data carried in the two types of frequency domain units, so that the MCSs can be better applicable to corresponding transmission resources.

In an optional implementation, spectral efficiency corresponding to the first MCS is higher than spectral efficiency corresponding to the second MCS. The spectral efficiency may be a product of a modulation order and a channel coding code rate. If spectral efficiency of an MCS is high, it indicates that the MCS is a higher-order MCS. In other words, it may be considered that the first MCS is a higher-order MCS relative to the second MCS, and the second MCS is a lower-order MCS. In other words, because the bandwidth of the second-type frequency domain unit is large, a lower-order MCS may be used in the second-type frequency domain unit, to improve data transmission reliability.

In an optional implementation, the method further includes: sending or receiving side control information in a first time domain unit in the first resource pool, where the side control information includes a frequency resource indicator value, the frequency resource indicator value indicates a frequency domain unit occupied by a reserved resource in K time domain units, and K is a positive integer. The first time domain unit belongs to the M1 first-type time domain units, the K time domain units include a second time domain unit, the second time domain unit belongs to the M2 second-type time domain units, and the side control information further indicates a quantity of frequency domain units occupied by the reserved resource in the second time domain unit; or the first time domain unit belongs to the M2 second-type time domain units, the K time domain units include a third time domain unit, the third time domain unit belongs to the M2 first-type time domain units, and the side control information further indicates a quantity of frequency domain units occupied by the reserved resource in the third time domain unit. It may be understood that side control information sent in a type of time domain unit (the first-type time domain unit or the second-type time domain unit) may include second indication information, and the second indication information may indicate a quantity of frequency domain units occupied by the reserved resource in the other type of time domain unit (the second-type time domain unit or the first-type time domain unit). In this indication manner, a quantity of frequency domain units occupied by the reserved resource in the first-type time domain unit may not be equal to a quantity of frequency domain units occupied by the reserved resource in the second-type time domain unit, so that a data transmission process is more flexible.

According to a third aspect, a communication apparatus is provided. The communication apparatus may be the terminal device according to any one of the first aspect and the second aspect. The communication apparatus has a function of the foregoing terminal device. The communication apparatus is, for example, a terminal device, a large device including the terminal device, or a functional module in the terminal device, for example, a baseband apparatus or a chip system. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to determine configuration information, where the configuration information is used to configure a first resource pool, the first resource pool is used for information transmission between the terminal device and another terminal device, the first resource pool includes M1 first-type time domain units and M2 second-type time domain units, both M1 and M2 are positive integers, each of the M1 first-type time domain units corresponds to N1 first-type frequency domain units in the first resource pool, each of the M2 second-type time domain units corresponds to N2 second-type frequency domain units in the first resource pool, both N1 and N2 are positive integers, a bandwidth of each first-type frequency domain unit is the same as a bandwidth of each second-type frequency domain unit, and N2 is greater than N1.

In an optional implementation, the processing unit is configured to determine configuration information, where the configuration information is used to configure a first resource pool, the first resource pool is used for information transmission between the terminal device and another terminal device, the first resource pool includes M1 first-type time domain units and M2 second-type time domain units, both M1 and M2 are positive integers, each of the M1 first-type time domain units corresponds to N first-type frequency domain units, each of the M2 second-type time domain units corresponds to N second-type frequency domain units, N is a positive integer, and a bandwidth of each first-type frequency domain unit is less than a bandwidth of each second-type frequency domain unit.

In an optional implementation, the communication apparatus further includes a storage unit (also referred to as a storage module sometimes). The processing unit is configured to: be coupled to the storage unit, and execute a program or instructions in the storage unit, so that the communication apparatus is enabled to perform a function of the terminal device according to any one of the first aspect and the second aspect.

According to a fourth aspect, another communication apparatus is provided. The communication apparatus may be a terminal device, or a chip or a chip system used in the terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the terminal device in the foregoing aspects.

According to a fifth aspect, a communication system is provided, including a terminal device. The terminal device is configured to perform the communication method performed by the terminal device according to any one of the first aspect and the second aspect.

In an optional implementation, the terminal device is implemented by using the third aspect, the fourth aspect, or the communication apparatus.

According to a sixth aspect, a computer-readable storage medium is provided. The computer-readable storage medium is configured to store a computer program or instructions. When the computer program or the instructions are run, the method performed by the terminal device in the foregoing aspects is implemented.

According to a seventh aspect, a computer program product including instructions is provided. When the computer program product runs on a computer, the method in the foregoing aspects is implemented.

BRIEF DESCRIPTION OF DRAWINGS

FIG. 1 is a diagram in which a resource in a UL slot can be used for SL communication;
FIG. 2 is a diagram in which a resource in an SBFD slot can be used for SL communication;
FIG. 3 is a diagram of an application scenario according to an embodiment of this application;
FIG. 4 is a flowchart of a communication method according to an embodiment of this application;
FIG. 5 is a diagram of a first resource pool according to an embodiment of this application;
FIG. 6 is a diagram of a structure of a slot including a PSFCH resource and a slot not including a PSFCH resource;
FIG. 7 is a flowchart of another communication method according to an embodiment of this application;
FIG. 8 is another diagram of a first resource pool according to an embodiment of this application;
FIG. 9 is a diagram of an apparatus according to an embodiment of this application; and
FIG. 10 is a diagram of another apparatus according to an embodiment of this application.

DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one (piece) of a, b, or c indicates a, b, c, a and b, a and c, b and c, or a, b, and c, where a, b, and c may be singular or plural.

Ordinal numbers such as "first" and "second" in embodiments of this application are used to distinguish between a plurality of objects, and are not used to limit sizes, content, sequences, time sequences, priorities, importance, or the like of the plurality of objects. In addition, step numbers in embodiments described in this application are merely intended to distinguish between different steps, but are not intended to limit a sequence of the steps. For example, S401 may be performed before S402, may be performed after S402, or may be performed at the same time with S402.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios, for example, including but not limited to a terminal device in the following scenarios: cellular communication, device-to-device (device-to-device, D2D) communication, V2X, machine-to-machine/machine type communication (machine-to-machine/machine-type communication, M2M/MTC), the internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, smart wearable, smart transportation, a smart city (smart city), an uncrewed aerial vehicle, a robot, and the like. The terminal device may sometimes be referred to as UE, a terminal, an access station, a UE station, a remote station, a wireless communication device, a user apparatus, or the like. For ease of description, an example in which the terminal device is UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a base station evolved from the 3rd generation partnership project (3rd generation partnership project, 3GPP), an access node, a wireless relay node, and a wireless backhaul node in a wireless fidelity (wireless fidelity, Wi-Fi) system, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in the vehicle-to-everything (vehicle-to-everything, V2X) technology may be a road side unit (road side unit, RSU). The following uses an example in which the access network device is a base station for description. The base station may communicate with a terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. For example, in a 5th generation mobile communication technology (the 5th generation, 5G) system, the core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used to describe the technical solutions provided in embodiments of this application.

The technical solutions provided in embodiments of this application are applied to a 4th generation mobile communication technology (the 4th generation, 4G) system such as a long term evolution (long term evolution, LTE) system, or are applied to a 5G system such as a new radio (new radio, NR) system, or are applied to a next generation mobile communication system or another similar communication system such as a 6th generation mobile communication technology (the 6th generation, 6G) system. This is not specifically limited. In addition, the technical solutions in embodiments of this application may be applied to a device-to-device (device-to-device, D2D) scenario, for example, an NR-D2D scenario, or may be applied to a vehicle-to-everything (vehicle to everything, V2X) scenario, for example, an NR-V2X scenario, for example, may be applied to a field such as intelligent driving, assisted driving, or an intelligent connected vehicle.

The following describes technical features in embodiments of this application.

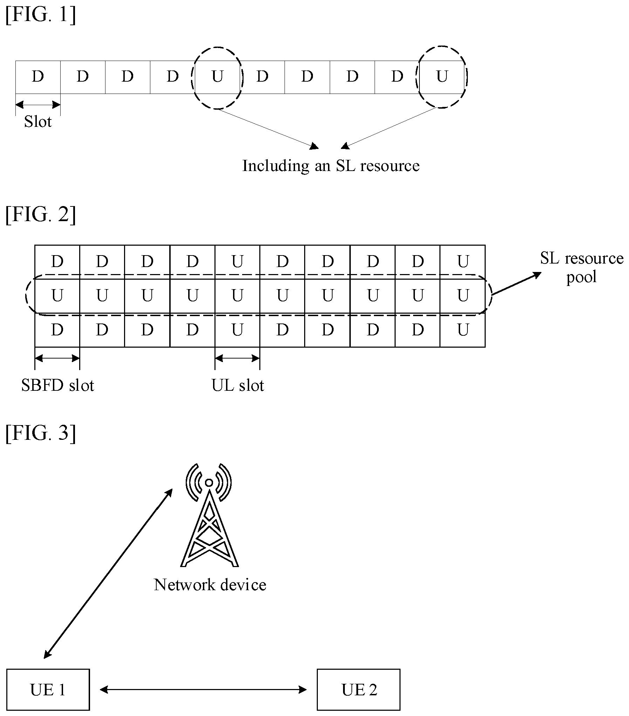

As shown in FIG. 1, in a TDD mode of a cellular network, a network device configures a downlink (downlink, DL) slot and a UL slot. In FIG. 1, "D" represents a DL slot, and "U" represents a UL slot. If SL communication is performed in a licensed spectrum, only a resource in a UL slot can be configured for an SL resource pool. Therefore, not every slot has an SL communication resource. When there are a small quantity of UL slots, a small quantity of available resources for SL communication and a long latency are caused, and it is difficult to meet a requirement of an ultra-low latency service in an industrial internet scenario and the like. In an existing SL resource pool configuration, an SL resource pool includes L consecutive or non-consecutive slots, and there are N consecutive subchannels in each slot. In other words, bandwidth sizes of all slots are the same.

In cellular communication, to reduce an uplink transmission latency, an SBFD mode is being discussed in 5G NR. As shown in FIG. 2, there may be one or more downlink subbands (represented as D in FIG. 2) and one or more uplink subbands (represented as U in FIG. 2) in an SBFD slot. The downlink subband is used by a network device to send information to UE, and the uplink subband is used by the UE to send information to the network device. In addition, the network device may simultaneously perform downlink sending and uplink receiving in the SBFD slot. Compared with a TDD system, the SBFD mode can reduce an uplink transmission latency. As shown in FIG. 2, in an SBFD mode of a cellular network, in addition to a UL slot resource, an uplink subband resource in an SBFD slot may also be considered for SL communication, to reduce an SL transmission latency. Therefore, for SL communication, the uplink subband resource in the SBFD slot may be considered as an available frequency domain resource in the SBFD slot. For example, all uplink subband resources in the SBFD slot may be considered as all available frequency domain resources in the SBFD slot.

However, in an existing SL resource pool configuration manner, sizes of frequency domain resources in all slots in a resource pool need to be the same. Therefore, if a resource pool includes both an uplink subband in a UL slot and an uplink subband in the SBFD slot, a size of a frequency domain resource in the resource pool cannot exceed a size of the uplink subband in the SBFD slot. Consequently, a frequency domain resource in the UL slot cannot be fully used, and a waste of resources is caused.

In view of this, the technical solutions in embodiments of this application are provided. In embodiments of this application, a first-type time domain unit included in a first resource pool may correspond to N1 first-type frequency domain units, and a second-type time domain unit may correspond to N2 second-type frequency domain units. Values of N1 and N2 are not limited. For example, N1 and N2 may be different. In other words, in the time domain units included in the first resource pool, the first resource pool may include different quantities of frequency domain units in different types of time domain units. For example, the first resource pool may include all available frequency domain resources in a UL slot, and may also include all available frequency domain resources in an SBFD slot. This reduces a waste of resources and improves resource utilization.

In embodiments of this application, "SL" may be referred to as "sidelink". For example, SL information may be referred to as sidelink information, and SL data may be referred to as sidelink data. Alternatively, SL may also be briefly referred to as "side". For example, the SL information may be referred to as side information, and the SL data may be referred to as side data. This is used as an example below.

In embodiments of this application, the frequency domain unit is, for example, a subband or a subchannel (subchannel). Optionally, the frequency domain unit in embodiments of this application is a minimum frequency domain resource scheduling unit in an SL resource pool (for example, the first resource pool to be described below). For example, during resource scheduling, scheduling is performed by using a frequency domain unit as a unit.

In embodiments of this application, the time domain unit is, for example, a subframe (subframe), a slot, a mini-slot (mini-slot), or an orthogonal frequency division multiplexing (orthogonal frequency division multiplexing, OFDM) symbol (symbol).

In embodiments of this application, unless otherwise specified, the described "resource pool" is an "SL resource pool". For example, the first resource pool to be described below may be an SL resource pool. The "SL resource pool" is a time-frequency resource set used for SL information transmission, and may have another name. This is not limited in this application.

FIG. 3 shows a communication network architecture to which an embodiment of this application is applicable. UE 1 and UE 2 may perform SL communication. Optionally, the communication network architecture may further include a network device. For example, the network device can communicate with the UE 1 and/or the UE 2 (in FIG. 3, an example in which the network device can communicate with the UE 1 is used). The network device is, for example, an access network device and/or a core network device.

To better describe embodiments of this application, the following describes the method provided in embodiments of this application with reference to the accompanying drawings. Unless otherwise specified below, in the accompanying drawings corresponding to embodiments of this application, steps represented by dashed lines are all optional steps. All methods provided in embodiments of this application may be applied to the network architecture shown in FIG. 3. For example, first UE in the methods provided in embodiments of this application may be the UE 1 in FIG. 3, second UE in the methods provided in embodiments of this application may be the UE 2 in FIG. 3, and the network device in the methods provided in embodiments of this application may be the network device in FIG. 3.

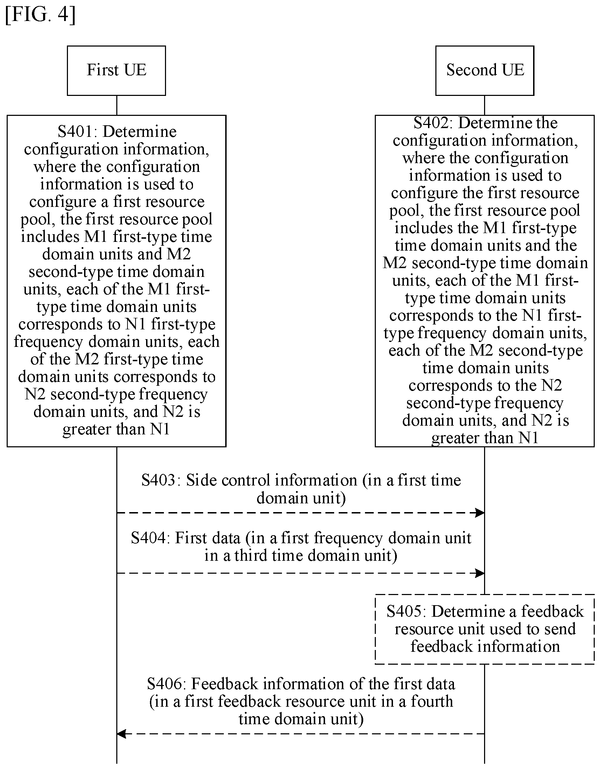

The following describes a communication method according to an embodiment of this application. FIG. 4 is a flowchart of the method.

S401: First UE determines configuration information. The configuration information may be used to configure a first resource pool, and the first resource pool may be used for communication between the first UE and another UE, for example, used for information transmission between the first UE and the another UE.

The first resource pool may include M1 first-type time domain units and M2 second-type time domain units. Both M1 and M2 are positive integers, and a value relationship between M1 and M2 is not limited. Duration of the first-type time domain unit may be equal to duration of the second-type time domain unit. For example, both the first-type time domain unit and the second-type time domain unit are slots or subframes. In this embodiment of this application, the time domain units may be classified based on frequency domain units corresponding to the time domain units. For example, the first-type time domain unit may correspond to N1 first-type frequency domain units in the first resource pool, the second-type time domain unit may correspond to N2 second-type frequency domain units in the first resource pool, and both N1 and N2 are positive integers. It may also be understood that, for a time domain unit in the first resource pool, if a time domain unit corresponds to N1 first-type frequency domain units in the first resource pool, the time domain unit is a first-type time domain unit. If a time domain unit corresponds to N2 second-type frequency domain units in the first resource pool, the time domain unit is a second-type time domain unit. That a time domain unit corresponds to (or is associated with) a frequency domain unit may be understood as: a resource in which the frequency domain unit is located is in the time domain unit, or a time domain location of a resource in which the frequency domain unit is located is a time domain location of the time domain unit.

A bandwidth of the first-type frequency domain unit may be the same as a bandwidth of the second-type frequency domain unit. For example, a quantity of resource units included in the first-type frequency domain unit is equal to a quantity of resource units included in the second-type frequency domain unit. The resource unit is, for example, a physical resource block (physical resource block, PRB), a resource block (resource block, RB), a resource element (resource element, RE), or a subcarrier (subcarrier). From this perspective, it may also be considered that the first-type frequency domain unit and the second-type frequency domain unit are frequency domain units of a same type. For example, in this embodiment of this application, it may also be understood that the first-type time domain unit corresponds to N1 frequency domain units in the first resource pool, and the second-type time domain unit corresponds to N2 frequency domain units in the first resource pool.

For example, N2 is greater than N1. In other words, a quantity of second-type frequency domain units corresponding to the second-type time domain unit is greater than a quantity of first-type frequency domain units corresponding to the first-type time domain unit. It can be learned that the first resource pool may include different quantities of frequency domain units in different time domain units, so that the resource pool is configured more flexibly. For example, the first-type time domain unit is an SBFD slot, and the second-type time domain unit is a UL slot. According to the technical solution in embodiments of this application, frequency domain resources in the two types of slots may be included in the first resource pool, to reduce a waste of resources and improve resource utilization.

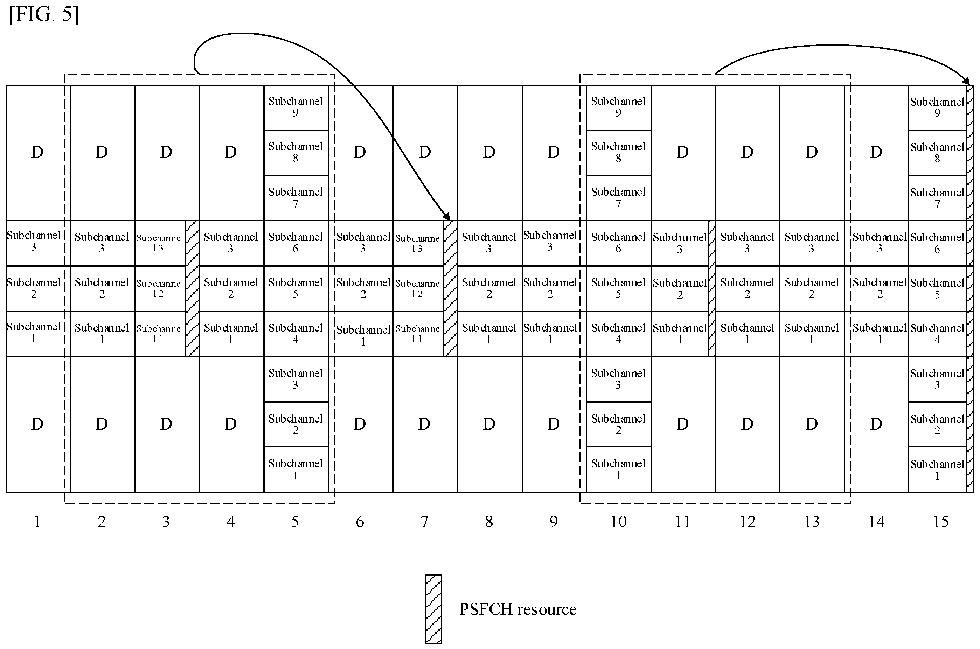

FIG. 5 is an example of the first resource pool. In FIG. 5, an example in which N1=3 and N2=9 is used, and this is not limited, provided that N2 is greater than N1. In FIG. 5, an example in which a time domain unit is a slot is used. Slots included in FIG. 5 may be all or a part of slots in the first resource pool. This is not limited herein. FIG. 5 uses an example in which both the first-type frequency domain unit and the second-type frequency domain unit are subchannels. For example, a first-type slot corresponds to a subchannel 1 to a subchannel 3, and a second-type slot corresponds to a subchannel 1 to a subchannel 9. "D" in FIG. 5 indicates that the frequency domain resources are resources used for downlink transmission and do not belong to the first resource pool.

The configuration information used to configure the first resource pool may be configured by the network device. For example, the network device may send the configuration information, and the first UE receives the configuration information. The network device may send the configuration information in a broadcast manner, for example, send the configuration information by using a system message or another broadcast message. Alternatively, the network device may send the configuration information in a unicast manner, for example, send the configuration information by using higher layer signaling or physical layer signaling. The higher layer signaling is, for example, radio resource control (radio resource control, RRC) signaling or a medium access control (medium access control, MAC) control element (control element, CE), and the physical layer signaling is, for example, downlink control information (downlink control information, DCI).

Alternatively, the configuration information may be preconfigured in the first UE, for example, configured when the first UE is delivered from a factory.

Alternatively, the configuration information may be configured by the first UE. For example, a higher layer (for example, an RRC layer) of the first UE may configure the configuration information. Alternatively, the configuration information may be configured by another UE, and may be sent to the first UE, and the first UE may receive the configuration information. For example, the first UE joins a UE group, and a group header device in the UE group may configure the configuration information, and send the configuration information to a group member device in the UE group (for example, send the configuration information in a multicast manner). If the first UE is a group header device, the first UE may configure the configuration information. If the first UE is a group member device, the first UE may receive the configuration information from the group header device.

The configuration information may include one or more of the following: information about an index set of the M1 first-type time domain units or indexes of the M1 first-type time domain units; information about an index set of the M2 second-type time domain units or indexes of the M2 second-type time domain units; frequency domain location information of the N1 first-type frequency domain units; frequency domain location information of the N2 second-type frequency domain units; a value of N1; a value of N2; or a quantity of PRBs (a quantity of RBs, a quantity of REs, a quantity of subcarriers, or the like) included in the first-type frequency domain unit or the second-type frequency domain unit.

Each of the M1 first-type time domain units may have a corresponding index. The indexes of the M1 first-type time domain units may be included in an index set, and the configuration information may include the information about the index set, for example, include an identifier of the index set. The first UE can determine the index set based on the information about the index set, to determine the indexes of the M1 first-type time domain units included in the index set.

Alternatively, the configuration information may directly include the indexes of the M1 first-type time domain units, so that the first UE can directly determine the M1 first-type time domain units without determining the index set. For example, the configuration information may indicate the indexes of the M1 first-type time domain units by using a bitmap (bitmap).

Optionally, the index of the first-type time domain unit is, for example, an index of a physical location of the first-type time domain unit, instead of an index of a logical location of the first-type time domain unit.

Similarly, each of the M2 second-type time domain units may have a corresponding index. The indexes of the M2 second-type time domain units may be included in an index set, and the configuration information may include the information about the index set, for example, include an identifier of the index set. The first UE can determine the index set based on the information about the index set, to determine the indexes of the M2 second-type time domain units included in the index set.

Alternatively, the configuration information may directly include the indexes of the M2 second-type time domain units, so that the first UE can directly determine the M2 second-type time domain units without determining the index set. For example, the configuration information may indicate the indexes of the M2 second-type time domain units by using a bitmap.

Optionally, the index of the second-type time domain unit is, for example, an index of a physical location of the second-type time domain unit, instead of an index of a logical location of the second-type time domain unit.

The configuration information may indicate the indexes of the M1 first-type time domain units and the indexes of the M2 second-type time domain units in a same manner. For example, the configuration information indicates the indexes of the M1 first-type time domain units and the indexes of the M2 second-type time domain units by using bitmaps. Alternatively, the configuration information may indicate the indexes of the M1 first-type time domain units and the indexes of the M2 second-type time domain units in different manners. For example, for the M1 first-type time domain units, the configuration information indicates the information about the index set in which the indexes of the M1 first-type time domain units are located. For the M2 second-type time domain units, the configuration information directly includes the indexes of the M2 second-type time domain units.

In the first resource pool, start frequency domain locations and end frequency domain locations of first-type frequency domain units in different first-type time domain units may be the same. Therefore, the configuration information includes frequency domain location information of N1 first-type frequency domain units in one first-type time domain unit. The frequency domain location information of the N1 first-type frequency domain units included in the configuration information includes, for example, frequency domain location information of each of the N1 first-type frequency domain units, or includes start frequency domain location information and/or end frequency domain location information of the N1 first-type frequency domain units as a whole. The start frequency domain location information of the N1 first-type frequency domain units as a whole may be start frequency domain location information of a start frequency domain unit in the N1 first-type frequency domain units, and the end frequency domain location information of the N1 first-type frequency domain units as a whole may be end frequency domain location information of an end frequency domain unit in the N1 first-type frequency domain units. The start frequency domain unit in the N1 first-type frequency domain units is, for example, a frequency domain unit with a lowest frequency in the N1 first-type frequency domain units, and an end frequency domain unit in the N1 first-type frequency domain units is, for example, a frequency domain unit with a highest frequency in the N1 first-type frequency domain units. FIG. 5 is used as an example. The configuration information may include frequency domain location information of each of three subchannels in any first-type slot, or include start frequency domain location information of a lowest subchannel in any first-type slot, and/or end frequency domain location information of an uppermost subchannel in the first-type slot. Frequency domain location information of one first-type frequency domain unit may include start frequency domain location information and/or end location information of the first-type frequency domain unit.

For example, start frequency domain location information of a first-type frequency domain unit included in the configuration information may be offset information between a start frequency domain location of the first-type frequency domain unit and the first resource unit in a bandwidth part (bandwidth part, BWP) in which the first resource pool is located. The start frequency domain location of the first-type frequency domain unit is, for example, a frequency domain location of a start resource unit in the first-type frequency domain unit. Configuration manners of start frequency domain locations and/or end frequency domain locations of the N1 first-type frequency domain units included in the configuration information, or an end frequency domain location of a first-type frequency domain unit may also be similar.

In the first resource pool, start frequency domain locations and end frequency domain locations of second-type frequency domain units in different second-type time domain units may be the same. Therefore, the configuration information includes frequency domain location information of N2 second-type frequency domain units in one second-type time domain unit. The frequency domain location information of the N2 second-type frequency domain units included in the configuration information includes, for example, frequency domain location information of each of the N2 second-type frequency domain units, or includes start frequency domain location information and/or end frequency domain location information of the N2 second-type frequency domain units as a whole. An implementation of the frequency domain location information of the N2 second-type frequency domain units included in the configuration information is similar to an implementation of the frequency domain location information of the N1 first-type frequency domain units included in the configuration information. For more content, refer to the descriptions in the previous section.

For example, start frequency domain location information of a second-type frequency domain unit included in the configuration information may be offset information between a start frequency domain location of the second-type frequency domain unit and the first resource unit in the BWP in which the first resource pool is located. The start frequency domain location of the second-type frequency domain unit is, for example, a frequency domain location of a start resource unit in the second-type frequency domain unit. Configuration manners of start frequency domain locations and/or end frequency domain locations of the N2 second-type frequency domain units included in the configuration information, or an end frequency domain location of a second-type frequency domain unit may also be similar.

Alternatively, start frequency domain location information of a second-type frequency domain unit included in the configuration information may be offset information between a start frequency domain location of the second-type frequency domain unit and the start frequency domain unit or the end frequency domain unit in the N1 first-type frequency domain units. Configuration manners of start frequency domain locations and/or end frequency domain locations of the N2 second-type frequency domain units included in the configuration information, or an end frequency domain location of a second-type frequency domain unit may also be similar. The first UE can also determine the frequency domain location information of the N2 second-type frequency domain units with reference to the frequency domain location information of the N1 first-type frequency domain units.

Alternatively, start frequency domain location information of a first-type frequency domain unit included in the configuration information may be offset information between a start frequency domain location of the first-type frequency domain unit and a start frequency domain unit or an end frequency domain unit in the N2 second-type frequency domain units. Configuration manners of start frequency domain locations and/or end frequency domain locations of the N1 first-type frequency domain units included in the configuration information, or an end frequency domain location of a first-type frequency domain unit may also be similar. The first UE can also determine the frequency domain location information of the N1 second-type frequency domain units with reference to the frequency domain location information of the N2 second-type frequency domain units.

As described above, a quantity of resource units included in the first-type frequency domain unit may be the same as a quantity of resource units included in the second-type frequency domain unit. Therefore, the configuration information may include a quantity of resource units included in any one of the first-type frequency domain units, or a quantity of resource units included in any one of the second-type frequency domain units. The first UE can determine, based on the quantity included in the configuration information, the quantity of resource units included in the first-type frequency domain unit, and can also determine the quantity of resource units included in the second-type frequency domain unit.

S402: Second UE determines the configuration information. The configuration information is consistent with the configuration information described in S401. For more content of S402, for example, information included in the configuration information and a manner in which the second UE determines the configuration information, refer to the descriptions of S401.

Optionally, the method may further include S403: The first UE sends side control information in a first time domain unit in the first resource pool. Correspondingly, the second UE receives the side control information in the first time domain unit. The side control information is, for example, sidelink control information (sidelink control information, SCI). The SCI may be sent through a physical sidelink control channel (physical sidelink control channel, PSCCH). Alternatively, if the SCI is first-order SCI (or referred to as SCI 1), the SCI is sent through a PSCCH, and if the SCI is second-order SCI (or referred to as SCI 2), the SCI may be sent through a physical sidelink shared channel (physical sidelink shared channel, PSSCH).

The side control information may be used to schedule a transport block (transport block, TB) corresponding to data. For example, the data is referred to as first data, the first data may correspond to one or more TBs, and the side control information may be used to schedule a part or all of the one or more TBs, for example, may schedule at least one of the one or more TBs. The side control information may further indicate a reserved resource of the first data, and the reserved resource is a transmission resource reserved for the first data. When selecting a resource, UE that receives the side control information may perform interference avoidance based on the reserved resource. For example, the side control information may indicate a time domain location and/or a frequency domain location of the PSCCH used to carry the side control information, and indicate a time domain location and/or a frequency domain location of a PSSCH associated with the PSCCH. The PSSCH may carry at least one TB corresponding to the first data. The side control information indicates the reserved resource of the first data. For example, the side control information may indicate location information of a frequency domain unit occupied by the reserved resource in K time domain units, where K is a positive integer. Optionally, the K time domain units are time domain units in which the reserved resource in a resource reservation period is located, or are reserved time domain units included in a resource reservation period. Therefore, the side control information is equivalent to indicating a time domain unit and/or a frequency domain unit occupied by the reserved resource in a resource reservation period. If the reserved resource occupies a time domain unit in a resource reservation period, the time domain unit may be referred to as a reserved time domain unit. All or a part of time domain units included in the resource reservation period may be used as reserved time domain units. Optionally, the side control information may further indicate a resource reservation period, for example, indicate a quantity of resource reservation periods (which may be understood as a quantity of periodicities in which resources are reserved for the first data), and/or duration of a resource reservation period (for example, the duration is longer than or equal to total duration of the K time domain units). A receiving end (for example, the second UE) of the side control information can determine the reserved resource based on the side control information. The reserved resource includes resources reserved for the first data in all resource reservation periods reserved for the first data. For example, if the side control information indicates that the quantity of resource reservation periods is 3, and duration of a resource reservation period is 1 slot, it is equivalent that resources in three slots are reserved for the first data.

The side control information indicates the frequency domain unit occupied by the reserved resource in the K time domain units. For example, in an indication manner, the side control information includes a frequency resource indicator value (frequency resource indicator value, FRIV), and the FRIV may indicate the frequency domain unit occupied by the reserved resource in the K time domain units. For example, K=2, and the reserved resource may occupy a same quantity of frequency domain units in the two time domain units. There may be a plurality of occupation manners. In other words, frequency domain units in the two time domain units may be combined in a plurality of manners (for example, a combination manner is a subchannel 1 in the first time domain unit and a subchannel 1 in the second time domain unit, another combination manner is a subchannel 1 and a subchannel 2 in the first time domain unit, a subchannel 2 and a subchannel 3 in the second time domain unit, and the like; and various combination manners may be exhaustively listed based on frequency domain units included in the two time domain units). The FRIV may indicate one of the combination manners, that is, indicate the frequency domain unit occupied by the reserved resource in the K time domain units. For example, if the side control information indicates a frequency domain unit occupied by the reserved resource in a resource reservation period, the receiving end (for example, the second UE) of the side control information may determine, based on the frequency domain unit occupied by the reserved resource in the resource reservation period, a frequency domain unit occupied by the first data in each resource reservation period.

A value of the FRIV may be related to a second parameter. The second parameter is, for example, a sidelink maximum number per reserve (sl-MaxNumPerReserve). sl-MaxNumPerReserve may indicate a maximum quantity of time domain units (reserved time domain units) that can be reserved in a resource reservation period. sl-MaxNumPer-Reserve is, for example, included in the configuration information. For example, if sl-MaxNumPerReserve=2,

$$\mathrm{FRIV} = n_{subCH,1}^{start} + \sum_{i=1}^{L_{\mathrm{subCH}}-1}\left(N_{\mathrm{subchannel}}^{SL} + 1 - i\right)$$ ; or if sl-MaxNumPerReserve=3,

$$FRIV = \quad n^{start}_{subCH,1} + n^{start}_{subCH,2} \cdot \left(N^{SL}_{\text{subchannel}} + 1 - L_{\text{subCH}}\right) + \quad \sum_{i=1}^{L_{\text{subCH}}-1}\left(N^{SL}_{\text{subchannel}} + 1 - i\right)^2$$

$n^{start}_{subCH,1}$ represents an index of a start frequency domain unit of the second reserved time domain unit in a resource reservation period, and $n^{start}_{subCH,2}$ represents an index of a start frequency domain unit of the third reserved time domain unit in a resource reservation period. For example, if only one time domain unit is reserved in a resource reservation period, $n^{start}_{subCH,1} = 0$ and $n^{start}_{subCH,2} = 0$; or if two time domain units are reserved in a resource reservation period, $n^{start}_{subCH,2} = 0$. LsubCH represents a quantity of frequency domain units reserved in one reserved time domain unit. $N^{SL}_{\text{subchannel}}$ may be referred to as a first parameter, and is to be described in the following. The UE (for example, the second UE) that receives the side control information may determine values of parameters such as LsubCH, $n^{start}_{subCH,1}$, and $n^{start}_{subCH,2}$ based on the FRIV included in the side control information, to determine a frequency domain location of the reserved resource.

A quantity of bits occupied by the FRIV may be determined based on a first parameter. For example, if sl-MaxNumPerReserve=2, the quantity of bits occupied by the $FRIV = \left\lceil \log_2\left(\frac{N^{SL}_{\text{subchannel}}(N^{SL}_{\text{subchannel}} + 1)}{2}\right) \right\rceil$. Alternatively, if sl-MaxNumPerReserve=2, the quantity of bits occupied by the $FRIV = \left\lceil \log_2\left(\frac{N^{SL}_{\text{subchannel}}(N^{SL}_{\text{subchannel}} + 1)(2N^{SL}_{\text{subchannel}} + 1)}{6}\right) \right\rceil$. $\lceil X \rceil$ indicates that X is rounded up.

If $N^{SL}_{\text{subchannel}} = N1$, the FRIV may indicate a combination of frequency domain units when time domain units in which the reserved resource in a resource reservation period is located are all first-type time domain units. In other words, if time domain units in which the reserved resource in a resource reservation period is located are all first-type time domain units, the FRIV may indicate a frequency domain unit reserved for the first data in the resource reservation period. However, if there is further a second-type time domain unit in the resource reservation period, the FRIV cannot indicate frequency domain units in the second-type time domain unit. If $N^{SL}_{\text{subchannel}} = N2$, the FRIV may indicate a combination of frequency domain units when time domain units in which the reserved resource in a resource reservation period is located are all second-type time domain units. In other words, if time domain units in which the reserved resource in a resource reservation period is located are all second-type time domain units, the FRIV may indicate a frequency domain unit reserved for the first data in the resource reservation period. Because the quantity of frequency domain units corresponding to the second-type time domain unit is greater than the quantity of frequency domain units corresponding to the first-type time domain unit, regardless of whether the time domain unit in which the reserved resource in the resource reservation period is located includes only the first-type time domain unit or the time domain units in which the reserved resource in the resource reservation period is located include both the first-type time domain unit and the second-type time domain unit, the FRIV can indicate the frequency domain unit reserved for the first data in the resource reservation period. In view of this, the first parameter in this embodiment of this application may be implemented in different manners.

In a first optional implementation of the first parameter, a value of the first parameter may be N2. For example, if sl-MaxNumPerReserve=2, the quantity of bits occupied by the $FRIV = \left\lceil \log_2\left(\frac{N2(N2 + 1)}{2}\right) \right\rceil$. Alternatively, if sl-MaxNumPerReserve=2, the quantity of bits occupied by the $FRIV = \left\lceil \log_2\left(\frac{N2(N2 + 1)(2N2 + 1)}{6}\right) \right\rceil$. In this implementation, regardless of whether a time domain unit in which the reserved resource in a resource reservation period is located includes only the second-type time domain unit, or includes only the first-type time domain unit, or includes both the first-type time domain unit and the second-type time domain unit, the FRIV may indicate the frequency domain unit reserved for the first data in the resource reservation period. The receiving end (for example, the second UE) of the side control information may determine a value of the first parameter based on N2, to determine the quantity of bits of the FRIV. This implementation is simple.

In a second optional implementation of the first parameter, if the side control information is sent in the first-type time domain unit, that is, the first time domain unit is the first-type time domain unit, a value of the first parameter may be N1.

For example, if sl-MaxNumPerReserve=2, the quantity of bits occupied by the $FRIV=\left\lceil\log_2(\frac{N1(N1+1)}{2})\right\rceil$. Alternatively, if sl-MaxNumPerReserve=3, the quantity of bits occupied by the $FRIV=\left\lceil\log_2(\frac{N1(N1+1)(2N1+1)}{6})\right\rceil$.

If the side control information is sent in the second-type time domain unit, that is, the first time domain unit is the second-type time domain unit, a value of the first parameter may be N2. For example, if sl-MaxNumPerReserve=2, the quantity of bits occupied by the $FRIV=\left\lceil\log_2(\frac{N2(N2+1)}{2})\right\rceil$. Alternatively, if sl-MaxNumPerReserve=3, the quantity of bits occupied by the $FRIV=\left\lceil\log_2(\frac{N2(N2+1)(2N2+1)}{6})\right\rceil$.

The receiving end (for example, the second UE) of the side control information may determine the value of the first parameter based on a type of the first time domain unit, to determine the quantity of bits of the FRIV. Compared with the foregoing implementation, in the second optional implementation of the first parameter, if the side control information is sent in the first-type time domain unit, the value of the first parameter is N1. Therefore, the FRIV occupies a small quantity of bits, and transmission overheads can be reduced.

Optionally, in the second optional implementation of the first parameter, the N2 second-type frequency domain units may be further divided into at least two frequency domain unit sets. Each frequency domain unit set may include one or more second-type frequency domain units. For example, the second-type frequency domain units included in each frequency domain unit set are consecutive in frequency domain. The N2 second-type frequency domain units may correspond to any second-type time domain unit. It may be understood that N2 second-type frequency domain units corresponding to each second-type time domain unit may be divided into at least two frequency domain unit sets, division manners of the second-type time domain units may be the same, and quantities and locations of frequency domain unit sets corresponding to different second-type time domain units may be the same. A quantity of the at least two frequency domain unit sets is, for example, P, for example, $P=\lceil N2/N1\rceil$, and a quantity of second-type frequency domain units included in each frequency domain unit set may be less than or equal to N1. One first-type frequency domain unit corresponding to the first-type time domain unit may be associated with one second-type frequency domain unit in the at least one frequency domain unit set corresponding to the second-type time domain units. For example, an index of a second-type frequency domain unit corresponding to a second-type time domain unit associated with a first-type frequency domain unit $i$ corresponding to a first-type time domain unit is $i + j \cdot N1$, where $0 \leq j < P$.

FIG. 5 is used as an example, N2=9, and N1=3. A subchannel 1 to a subchannel 9 in any second-type time domain unit (for example, a slot 5) may be divided into three subchannel sets. A subchannel set 1 includes the subchannel 1 to the subchannel 3, a subchannel set 2 includes the subchannel 4 to the subchannel 6, and a subchannel set 3 includes the subchannel 7 to the subchannel 9. A subchannel 1 in any first-type time domain unit (for example, a slot 1) is associated with the subchannel 1 in the subchannel set 1, the subchannel 4 in the subchannel set 2, and the subchannel 7 in the subchannel set 3. A subchannel 2 in any first-type time domain unit (for example, the slot 1) is associated with the subchannel 2 in the subchannel set 1, the subchannel 5 in the subchannel set 2, and the subchannel 8 in the subchannel set 3. A subchannel 3 in any first-type time domain unit (for example, the slot 1) is associated with the subchannel 3 in the subchannel set 1, the subchannel 6 in the subchannel set 2, and the subchannel 9 in the subchannel set 3.

In the second optional implementation of the first parameter, if the K time domain units include a second time domain unit, the second time domain unit is the second-type time domain unit, and the first time domain unit is the first-type time domain unit, optionally, the side control information may further indicate information about a frequency domain unit set (for example, a first frequency domain unit set) occupied by the reserved resource in the second time domain unit. If the first time domain unit is the first-type time domain unit, the quantity of bits of the FRIV is determined based on N1. In this case, if the K time domain units include the second-type time domain unit, the FRIV cannot indicate an additional frequency domain unit (that is, an additional frequency domain unit relative to a frequency domain unit corresponding to the first-type time domain unit) occupied by the reserved resource in the second-type time domain unit. Therefore, the side control information may further indicate the frequency domain unit set occupied by the reserved resource in the second time domain unit, so that the receiving end of the side control information can determine, based on the FRIV and the frequency domain unit set occupied by the reserved resource in the second time domain unit, the frequency domain unit occupied by the reserved resource in the K time domain units.

For example, the first time domain unit is the first-type time domain unit, and the second UE determines, based on the FRIV included in the SCI sent in the first time domain unit, that the reserved resource occupies a subchannel 2 in a time domain unit in a resource reservation period. In addition, the SCI further indicates that the reserved resource occupies the subchannel set 3 in the second time domain unit. If the time domain unit is the first-type time domain unit, it may be determined that the reserved resource occupies the subchannel 2 in the time domain unit; or if the time domain unit is the second-type time domain unit, it may be determined, with reference to the subchannel set 3 indicated by the side control information, that a subchannel that is in the subchannel set 3 and that is associated with the subchannel 2 corresponding to the first-type time domain unit is the subchannel 8, and it may be determined that the reserved resource occupies the subchannel 8 in the time domain unit.

As described above, the side control information may indicate, by using the FRIV, the frequency domain unit occupied by the reserved resource in the K time domain units. In addition, the side control information may further indicate, in another manner, the frequency domain unit occupied by the reserved resource in the K time domain units. For example, in an indication manner, the side control information includes K pieces of first indication information, and the K pieces of first indication information may indicate the frequency domain unit occupied by the reserved resource in the K time domain units. One piece of first indication information may indicate a frequency domain unit occupied by the reserved resource in one of the K time domain units, and the K pieces of first indication information are in one-to-one correspondence with the K time domain units. It is equivalent that the K pieces of first indication information exist independently and do not interfere with each other, and each indicates a frequency domain unit occupied by the reserved resource in a time domain unit. Therefore, the side control information can also indicate the frequency domain unit occupied by the reserved resource in the K time domain units. Optionally, each of the K pieces of first indication information may be implemented by a bitmap. A quantity of bits of one bitmap may be the same as a quantity of frequency domain units corresponding to a time domain unit indicated by the bitmap, so that one bit in the bitmap may indicate one frequency domain unit corresponding to the time domain unit. Compared with indication by using the FRIV, indication by using the first indication information is more flexible.

In S403, the first UE may send the side control information, where the side control information may schedule at least one TB corresponding to the first data. Therefore, optionally, the method may further include S404: The first UE sends the at least one TB corresponding to the first data in a first frequency domain unit in a third time domain unit. Correspondingly, the second UE receives the at least one TB corresponding to the first data in the first frequency domain unit in the third time domain unit. The third time domain unit and the first time domain unit may be a same time domain unit, or may be different time domain units. The second UE may receive the side control information, and the receiving end of the first data may be the second UE, or may be another UE. In this embodiment of this application, the second UE is used as an example.

After receiving the at least one TB corresponding to the first data, the second UE may send feedback information by using a physical sidelink feedback channel (physical sidelink feedback channel, PSFCH). The feedback information is, for example, hybrid automatic repeat request (hybrid automatic repeat request, HARQ) feedback, for example, a positive acknowledgment (ACK) or a negative acknowledgment (NACK), to indicate that the at least one TB corresponding to the first data is successfully received or fails to be received. The PSFCH resource is a periodic resource configured (pre-configured) for the first resource pool, and may be configured by using the configuration information. For example, the configuration information may be used to configure a period of the PSFCH resource by using a third parameter. The third parameter is, for example, a periodic PSFCH resource (periodPSFCHresource) parameter. A value of the period-PSFCHresource parameter may be 0, 1, 2, or 4, or may be another value. For example, if periodPSFCHresource=0, it indicates that there is no PSFCH resource in the first resource pool. If periodPSFCHresource=1, it indicates that each time domain unit included in the first resource pool includes a PSFCH resource. If periodPSFCHresource=2, it indicates that one of every two time domain units included in the first resource pool includes a PSFCH resource. If period-PSFCHresource=4, it means that one of every four time domain units included in the first resource pool includes a PSFCH resource.

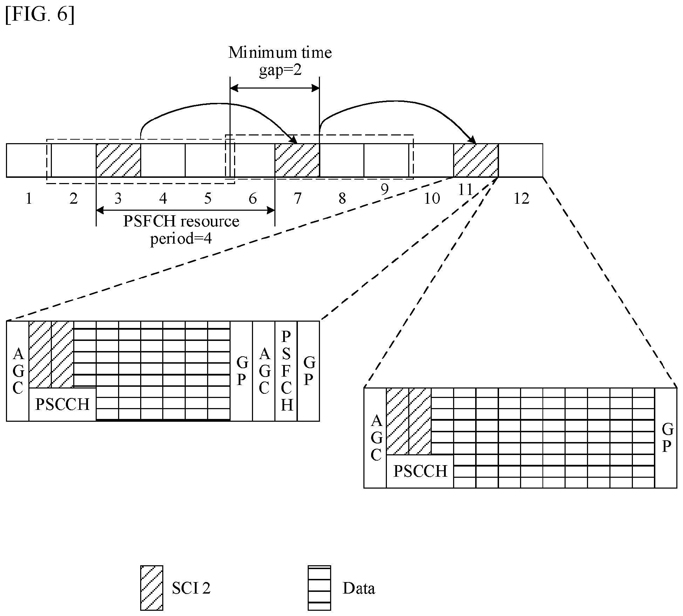

As shown in FIG. 6, an example in which a time domain unit is a slot is used. Each grid in FIG. 6 represents one logical slot, that is, any slot included in the first resource pool. Different logical slots may be physically consecutive or may be non-consecutive. Assuming that periodPSFCHresource=4, one of every four slots includes a PSFCH resource. For example, each slot includes 14 OFDM symbols. For a slot that does not include a PSFCH resource, the first OFDM symbol in the slot is an automatic gain control (automatic gain control, AGC) symbol, and is mainly used by a receiving UE (for example, the second UE) to adjust an amplification multiple of a received signal. The last symbol in the slot is a guard period (guard period, GP) symbol, and is mainly used for receiving-sending conversion or sending-receiving conversion. For a slot including a PSFCH resource, in addition to the first OFDM symbol being an AGC symbol and the last OFDM symbol being a GP symbol, there are system-level resource overheads of three additional OFDM symbols. One of the three OFDM symbols is a GP symbol, one OFDM symbol is an AGC symbol, and the other OFDM symbol is a PSFCH symbol.

Considering a processing time of the receiving UE (for example, the second UE), a minimum time gap between a resource used to receive data and a resource used to send feedback information may be configured (pre-configured) for the first resource pool. For example, the time gap is configured by using a fourth parameter, and the fourth parameter may be included in the configuration information. For example, the fourth parameter is a minimum time gap PSFCH (MinTimeGapPSFCH) parameter, and a value of the MinTimeGapPSFCH parameter may be 2 or 3, or may be another value. For example, if MinTimeGapPSFCH=2, it means that there is a minimum gap of two time domain units between a PSSCH resource used to receive data and a PSFCH resource used to send feedback information of the data. If MinTimeGapPSFCH=3, it means that there is a minimum gap of three time domain units between a PSSCH resource used to receive data and a PSFCH resource used to send feedback information of the data. Both the sending UE (for example, the first UE) and the receiving UE (for example, the second UE) may determine, based on the third parameter and the fourth parameter, an association relationship between the PSSCH resource used to receive the data and the PSFCH resource used to send the feedback information of the data. For example, in FIG. 6, assuming that periodPSFCHresource=4 and MinTimeGapPSFCH=2, a PSSCH resource in every four time domain units is associated with a PSFCH resource in one time domain unit, and each of the four time domain units is at least two slots apart from a slot in which the associated PSFCH resource is located. In FIG. 6, the second PSFCH resource (a PSFCH resource in a slot 7) is associated with a PSSCH resource of four time domain units (a slot 2 to a slot 5) in the first dashed line box, and the third PSFCH resource (a PSFCH resource in a slot 11) is associated with a PSSCH resource of four time domain units (a slot 6 to a slot 9) in the second dashed line box.

In this embodiment of this application, the first resource pool may include the first-type time domain unit and the second-type time domain unit. Different types of time domain units correspond to different quantities of frequency domain units. In this case, some PSFCH resources may be associated with the second-type time domain unit (for example, slots associated with a slot 7 in FIG. 5 include a slot 2 to a slot 5, the slot 5 is a second-type time domain unit, and a PSFCH resource in the slot 7 is associated with the second-type time domain unit). Further, some PSFCH resources are not associated with the second-type time domain unit (for example, slots associated with a slot 11 in FIG. 5 are a slot 6 to a slot 9, and are first-type time domain units, and a PSFCH resource in the slot 11 is not associated with the second-type time domain unit). Because the second-type time domain unit included in the first resource pool corresponds to a large quantity of frequency domain units, a PSFCH resource associated with the second-type time domain unit is associated with more frequency domain units, and a PSFCH resource that is not associated with the second-type time domain unit is associated fewer frequency domain units. FIG. 5 is used as an example. The PSFCH resource in the slot 7 may be associated with a total of 18 frequency domain units in the slot 2 to the slot 5, and the PSFCH resource in the slot 11 may be associated with a total of 12 frequency domain units in the slot 6 to the slot 9. Optionally, a PSFCH resource in a time domain unit may be divided into a plurality of feedback resource unit sets in frequency domain. A quantity of feedback resource unit sets obtained through division may be equal to a quantity of frequency domain units associated with the PSFCH resource. In this case, the frequency domain units associated with the PSFCH resource may be in one-to-one correspondence with the feedback resource unit sets.

For example, the first resource pool includes a fifth time domain unit, the fifth time domain unit includes a PSFCH resource, the PSFCH resource in the fifth time domain unit is associated with L3 time domain units, and the L3 time domain units do not include the second-type time domain unit. The PSFCH resource may be divided into H3 feedback resource unit sets in frequency domain, and the H3 feedback resource unit sets are in one-to-one correspondence with frequency domain units in the L3 time domain units. Both L3 and H3 are positive integers. FIG. 5 is used as an example. If the fifth time domain unit is, for example, the slot 11, L3=4, and H3=12.

For another example, the first resource pool includes a sixth time domain unit, the sixth time domain unit includes a PSFCH resource, the PSFCH resource in the sixth time domain unit is associated with L2 time domain units, and the L2 time domain units include the second-type time domain unit. The PSFCH resource may be divided into H2 feedback resource unit sets in frequency domain, and the H2 feedback resource unit sets are in one-to-one correspondence with frequency domain units in the L2 time domain units. Both L2 and H2 are positive integers. FIG. 5 is used as an example. If the sixth time domain unit is, for example, the slot 7, L2=4, and H2=18. It can be learned that, because the quantity of first-type frequency domain units corresponding to the first-type time domain unit is less than the quantity of second-type frequency domain units corresponding to the second-type time domain unit, H3 may be less than H2.

A PFSCH resource in a time domain unit is divided into a plurality of feedback resource unit sets in frequency domain. Each feedback resource unit set may include one or more feedback resource units. The feedback resource unit is, for example, a resource unit including e time domain subunits and f frequency domain subunits, and both e and f are positive integers. The time domain subunit is, for example, an OFDM symbol, and a bandwidth of the frequency domain subunit is, for example, the same as a bandwidth of a PRB. For example, if e=1, the feedback resource unit is a PRB, and in this case, the feedback resource unit set may also be understood as a PRB set; or e may be 2 or another value.

Optionally, if a time domain unit associated with a PSFCH resource includes the second-type time domain unit, and a time domain unit in which the PSFCH resource is located is the first-type time domain unit, e may be greater than 1, for example, e=2, or e may be greater than 2. For example, in FIG. 5, e corresponding to PSFCH resources in the slot 3 and the slot 7 may be greater than 1. If a time domain unit associated with a PSFCH resource does not include the second-type time domain unit, and/or a time domain unit in which the PSFCH resource is located is the second-type time domain unit, e may be 1. For example, in FIG. 5, a time domain unit associated with the PSFCH resource in the slot 11 does not include the second-type time domain unit, and a slot 15 is the second-type time domain unit. Therefore, e corresponding to PSFCH resources in the slot 11 and the slot 15 may be 1. For a PSFCH resource associated with the second-type time domain unit, the PSFCH resource is associated with a large quantity of frequency domain units. In other words, the PSFCH resource is used to transmit more feedback information. Setting e to be greater than 1 is equivalent to making the feedback resource unit include more resources in time domain, to transmit more feedback information. If the time domain unit in which the PSFCH resource is located is the second-type time domain unit, frequency domain resources of the PSFCH resource are abundant, and can be used to transmit more feedback information. Therefore, in this case, a time domain resource of the feedback resource unit may not need to be extended. For example, the first UE sends the at least one TB corresponding to the first data in the first frequency domain unit in the third time domain unit, a PSFCH resource associated with the third time domain unit is located in a fourth time domain unit, and the fourth time domain unit is associated with L1 time domain units in total. If the L1 time domain units include the second-type time domain unit, and the fourth time domain unit is the first-type time domain unit, e may be greater than 1.

If the second UE is to send the feedback information of the at least one TB corresponding to the first data, the second UE is to determine a feedback resource unit used to send the feedback information. Therefore, optionally, the method may further include S405: The second UE determines the feedback resource unit used to send the feedback information. In addition, the first UE may also determine a feedback resource unit used to receive the feedback information. A manner of determining the feedback resource unit by the first UE is similar to that of determining the feedback resource unit by the second UE.

As described above, the first UE sends, in the first frequency domain unit in the third time domain unit, the at least one TB corresponding to the first data. For example, the PSFCH resource associated with the third time domain unit is located in the fourth time domain unit, the fourth time domain unit is associated with L1 time domain units in total, and the third time domain unit belongs to the L1 time domain units. The fourth time domain unit (or a PSFCH resource in the fourth time domain unit) may include H1 feedback resource unit sets used to send or receive the feedback information, and the H1 feedback resource unit sets are in one-to-one correspondence with frequency domain units in the L1 time domain units. For example, if the third time domain unit is the fifth time domain unit, H1=H3 and L1=L3; or if the third time domain unit is the sixth time domain unit, H1=H2 and L1=L2.

For example, if the first frequency domain unit in the third time domain unit corresponds to a first feedback resource unit set in the H1 feedback resource unit sets, the first UE or the second UE may determine, from the first feedback resource unit set, a feedback resource unit used to transmit the feedback information of the at least one TB corresponding to the first data. For example, the determined feedback resource unit is a first feedback resource unit. Based on different values of e, manners of determining the first feedback resource unit from the first feedback resource unit set may also be different. The following describes the manners by using examples.

e=1. For example, the first feedback resource unit set includes D feedback resource units. Further, the first UE or the second UE may determine, based on the configuration information, that a quantity of cyclic shift pairs (cyclic shift pair) that can be used in a feedback information sequence is G. D$\times$G feedback resources may be determined in total. The feedback resources include both a time-frequency resource (that is, the D feedback resource units) and a code domain resource (that is, the G cyclic shift pairs). The first UE or the second UE may further determine a corresponding feedback resource from the D$\times$G feedback resources based on a value of $(P_{ID} + M_{ID})mod(D \times G)$, and a time-frequency resource included in the feedback resource is the first feedback resource unit. mod represents a modulo operation. $P_{ID}$ is determined based on a source ID corresponding to the PSSCH used to transmit the first data, and $M_{ID}$ is set to 0 or is determined based on a group ID configured by a higher layer. Alternatively, $P_{ID}$ is set to 0 or is determined based on the source ID corresponding to the PSSCH used to transmit the first data, and $M_{ID}$ is determined based on a destination ID corresponding to the PSSCH used to transmit the first data or is determined based on a group ID configured by a higher layer. One feedback resource may be used to transmit an ACK, or may be used to transmit a NACK. Specific transmitted information may be determined based on a result of decoding the received first data by the second UE.

e>1. The first UE or the second UE may determine one or more of the following based on an identifier related to the first data: an index of the first feedback resource unit, an index of a frequency domain subunit corresponding to the first feedback resource unit, a cyclic shift of a sequence corresponding to the first feedback resource unit, or an orthogonal cover code (orthogonal cover code, OCC) corresponding to the first feedback resource unit. If one or more of the foregoing are determined, the first feedback resource unit is determined. Optionally, the OCC is, for example, a Walsh (Walsh) code sequence or a discrete Fourier transform (discrete Fourier transform, DFT) sequence. The sequence corresponding to the first feedback resource unit may be understood as: The sequence may be used as feedback information carried in the first feedback resource unit, and the sequence is, for example, a ZC (Zadoff Chu) sequence, or may be another sequence. For example, if cyclic shifts of two feedback information sequences are different, it indicates that two pieces of feedback information sequences are different; or if OCCs of two feedback information sequences are different, it indicates that two pieces of feedback information are different; or if feedback resource units in which the two feedback information sequences are located are different, it indicates that two pieces of feedback information are different. It can be learned that an optional range of the feedback information is extended by using features of a plurality of dimensions. For example, e=2. A total quantity of resource indexes of feedback resource units included in a PSFCH resource using two frequency domain subunits is twice a total quantity of resource indexes of feedback resource units included in a PSFCH resource using one frequency domain subunit. Therefore, a capacity of the PSFCH resource is expanded, and more feedback information can be carried.

The identifier related to the first data includes, for example, one or more of the following: an identifier of a service corresponding to the first data, an identifier of a transmitting end (for example, the first UE) of the first data, an identifier of a receiving end (for example, the second UE) of the first data, or a multicast-related identifier. For example, if the service corresponding to the first data is a multicast service, and the first data is sent in a multicast manner, the multicast-related identifier may include an identifier of a group header device and/or an identifier of a group member device in the multicast group.

Optionally, the method may further include S406: The second UE sends the feedback information of the at least one TB corresponding to the first data in the first feedback resource unit in the fourth time domain unit. Correspondingly, the first UE receives the feedback information in the first feedback resource unit in the fourth time domain unit. The first UE and the second UE may determine the first feedback resource unit in a same manner (as described above). Therefore, the first UE can correctly receive the feedback information.

In this embodiment of this application, the first-type time domain unit included in the first resource pool may correspond to the N1 first-type frequency domain units, and the second-type time domain unit may correspond to the N2 second-type frequency domain units. Values of N1 and N2 are not limited. For example, N1 and N2 may be different. In other words, in the time domain units included in the first resource pool, the first resource pool may include different quantities of frequency domain units in different types of time domain units. For example, the first resource pool may include all available frequency domain resources in a UL slot, and may also include all available frequency domain resources in an SBFD slot. This reduces a waste of resources and improves resource utilization. In addition, in this embodiment of this application, a manner in which the side control information indicates the frequency domain resource occupied by the reserved resource is designed. Regardless of a type of time domain resource occupied by the reserved resource, the side control information can indicate the frequency domain unit occupied by the reserved resource, so that the receiving UE can correctly receive data, and another UE can perform interference avoidance based on the side control information when selecting a resource. In addition, in this embodiment of this application, a capacity of the PFSCH resource used to send the feedback information may be further extended, to transmit more feedback information, to meet requirements of more users.

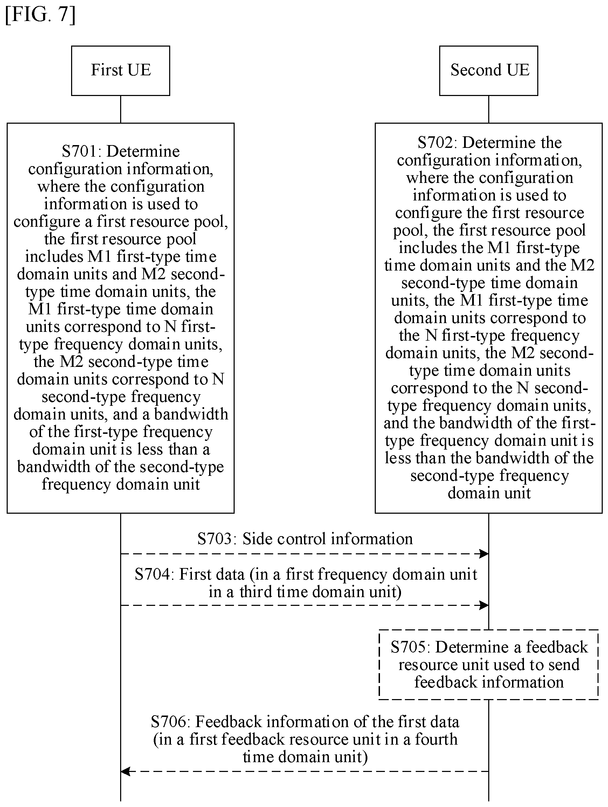

The following describes another communication method according to an embodiment of this application. FIG. 7 is a flowchart of the method.

S701: First UE determines configuration information. The configuration information may be used to configure a first resource pool, and the first resource pool may be used for communication between the first UE and another UE, for example, used for information transmission between the first UE and the another UE.

The first resource pool may include M1 first-type time domain units and M2 second-type time domain units. Both M1 and M2 are positive integers, and a value relationship between M1 and M2 is not limited. Duration of the first-type time domain unit may be equal to duration of the second-type time domain unit. For example, both the first-type time domain unit and the second-type time domain unit are slots or subframes. In this embodiment of this application, the time domain units may be classified based on frequency domain units corresponding to the time domain units. For example, the first-type time domain unit may correspond to N first-type frequency domain units in the first resource pool, the second-type time domain unit may correspond to N second-type frequency domain units in the first resource pool, and N is a positive integer. It may also be understood that, for a time domain unit in the first resource pool, if a time domain unit corresponds to N first-type frequency domain units in the first resource pool, the time domain unit is a first-type time domain unit. If a time domain unit corresponds to N second-type frequency domain units in the first resource pool, the time domain unit is a second-type time domain unit. That a time domain unit corresponds to (or is associated with) a frequency domain unit may be understood as: a resource in which the frequency domain unit is located is in the time domain unit, or a time domain location of a resource in which the frequency domain unit is located is a time domain location of the time domain unit.

A bandwidth of the first-type frequency domain unit may be less than a bandwidth of the second-type frequency domain unit. For example, a quantity of resource units included in the first-type frequency domain unit may be less than a quantity of resource units included in the second-type frequency domain unit. The resource unit is, for example, a PRB. For example, the bandwidth of the second-type frequency domain unit may be a multiple of the bandwidth of the first-type frequency domain unit, or the two may not be in a multiple relationship. It can be learned that the first resource pool may include frequency domain units of different bandwidths in different time domain units, so that the resource pool is configured more flexibly. For example, the first-type time domain unit is an SBFD slot, and the second-type time domain unit is a UL slot. According to the technical solution in this embodiment of this application, frequency domain resources in the two types of slots may be included in the first resource pool, to reduce a waste of resources and improve resource utilization.

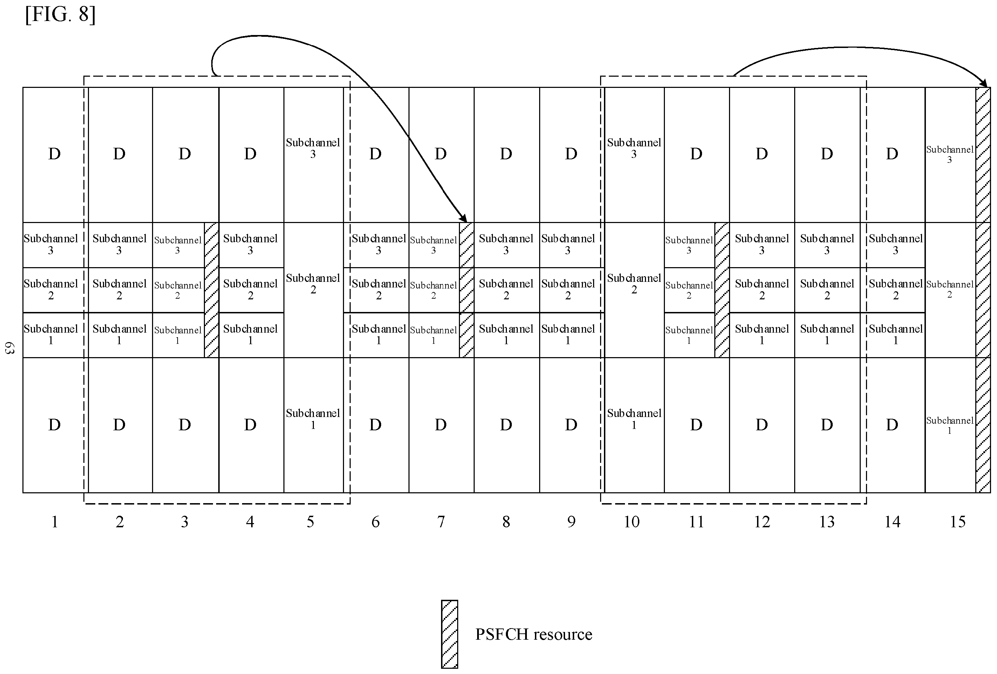

FIG. 8 is an example of the first resource pool. In FIG. 8, N=3 is used as an example, and this is not limited in practice. In FIG. 8, an example in which a time domain unit is a slot is used. Slots included in FIG. 8 may be all or a part of slots in the first resource pool. This is not limited herein. FIG. 8 uses an example in which both the first-type frequency domain unit and the second-type frequency domain unit are subchannels. For example, a first-type slot corresponds to a subchannel 1 to a subchannel 3, and a second-type slot also corresponds to a subchannel 1 to a subchannel 3. However, a bandwidth of a subchannel corresponding to the first-type slot is less than a bandwidth of a subchannel corresponding to the second-type slot. "D" in FIG. 8 indicates that the frequency domain resources are resources used for downlink transmission and do not belong to the first resource pool. In addition, in FIG. 8, the bandwidth of the second-type frequency domain unit is three times the bandwidth of the first-type frequency domain unit, and frequency domain locations of the second-type frequency domain unit and the first-type frequency domain unit are aligned. This is not limited in practice.

For a manner in which the first UE determines the configuration information, or a device that configures the configuration information, refer to the descriptions of the embodiment shown in FIG. 4.

The configuration information may include one or more of the following: information about an index set of the M1 first-type time domain units or indexes of the M1 first-type time domain units; information about an index set of the M2 second-type time domain units or indexes of the M2 second-type time domain units; frequency domain location information of the N first-type frequency domain units; frequency domain location information of N second-type frequency domain units; a value of N; a quantity of PRBs (a quantity of RBs, a quantity of REs, a quantity of subcarriers, or the like) included in the first-type frequency domain unit; or a quantity of PRBs (a quantity of RBs, a quantity of REs, a quantity of subcarriers, or the like) included in the second-type frequency domain unit.

For descriptions of parameters such as the information about the index set of the M1 first-type time domain units, the indexes of the M1 first-type time domain units, the information about the index set of the M2 second-type time domain units, the indexes of the M2 second-type time domain units, the frequency domain location information of the N first-type frequency domain units, and the frequency domain location information of the N second-type frequency domain units, refer to the embodiment shown in FIG. 4.

In this embodiment of this application, the quantity of resource units included in the first-type frequency domain unit may be different from the quantity of resource units included in the second-type frequency domain unit. For example, the quantity of resource units included in the first-type frequency domain unit may be less than the quantity of resource units included in the second-type frequency domain unit. Therefore, the configuration information may be used to configure the quantity of resource units included in the first-type frequency domain unit and/or configure the quantity of resource units included in the second-type frequency domain unit.

S702: Second UE determines the configuration information. The configuration information is consistent with the configuration information described in S701. For more content of S702, for example, information included in the configuration information and a manner in which the second UE determines the configuration information, refer to the descriptions of S701.

Optionally, the method may further include S703: The first UE sends side control information. Correspondingly, the second UE receives the side control information. For example, the first UE may send the side control information by using a resource (for example, a first time domain unit) in the first resource pool. The side control information is, for example, SCI. For a description of this, refer to the embodiment shown in FIG. 4.

The side control information may be used to schedule a TB corresponding to data. For example, the data is referred to as first data, the first data may correspond to one or more TBs, and the side control information may schedule a part or all of the one or more TBs, for example, may schedule at least one of the one or more TBs. The side control information may further indicate a reserved resource of the first data, and the reserved resource is a transmission resource reserved for the first data. When selecting a resource, UE that receives the side control information may perform interference avoidance based on the reserved resource. For example, the side control information may indicate a time domain location and/or a frequency domain location of a PSCCH used to carry the side control information, and indicate a time domain location and/or a frequency domain location of a PSSCH associated with the PSCCH. The PSSCH may carry at least one TB corresponding to the first data. In addition, the side control information may further indicate a frequency domain unit occupied by the reserved resource in K time domain units, and K is a positive integer. Optionally, the K time domain units are all time domain units included in the reserved resource in a resource reservation period, or are reserved time domain units included in a resource reservation period. Therefore, the side control information is equivalent to indicating a time domain unit and/or a frequency domain unit occupied by the reserved resource in a resource reservation period. If the reserved resource occupies a time domain unit in a resource reservation period, the time domain unit may be referred to as a reserved time domain unit. All or a part of time domain units included in the resource reservation period may be used as reserved time domain units. Optionally, the side control information may further indicate a resource reservation period, for example, indicate a quantity of resource reservation periods (which may be understood as a quantity of periodicities in which resources are reserved for the first data), and/or duration of a resource reservation period (for example, the duration is longer than or equal to total duration of the K time domain units). A receiving end (for example, the second UE) of the side control information can determine the reserved resource based on the side control information. The reserved resource includes resources reserved for the first data in all resource reservation periods reserved for the first data. For example, if the side control information indicates that the quantity of resource reservation periods is 3, and duration of a resource reservation period is 1 slot, it is equivalent that resources in three slots are reserved for the first data.

There may be different indication manners in which the side control information indicates the frequency domain unit occupied by the reserved resource in the K time domain units.

In an optional implementation, for example, in a first indication manner, the side control information includes an FRIV, and the FRIV may indicate the frequency domain unit occupied by the reserved resource in the K time domain units, without using other indication information. For an indication manner of the FRIV, a calculation manner of a value of the FRIV, and the like, refer to the embodiment shown in FIG. 4. A quantity of bits occupied by the FRIV may be determined based on a first parameter $N_{\text{subchannel}}^{SL}$. In this embodiment of this application, a value of the first parameter may be N, indicating a quantity of frequency domain units included in each time domain unit in the first resource pool. In the first indication manner, regardless of whether the reserved resource in a resource reservation period includes only the second-type time domain unit, or includes only the first-type time domain unit, or includes both the first-type time domain unit and the second-type time domain unit, the FRIV may indicate the frequency domain unit reserved for the first data in the resource reservation period. The receiving end (for example, the second UE) of the side control information may determine a value of the first parameter based on N, to determine the quantity of bits of the FRIV. This implementation is simple.

The side control information may include a parameter used to decode the at least one TB corresponding to the first data. For example, the parameter includes a modulation and coding scheme (modulation and coding scheme, MCS). For example, the side control information indicates a first MCS and a second MCS, the first MCS is applicable to the first-type time domain unit in the K time domain units, and the second MCS is applicable to the second-type time domain unit in the K time domain units. In the first indication manner, the first MCS and the second MCS may be different. In other words, because bandwidths of frequency domain units corresponding to the two types of time domain units are different, in this embodiment of this application, different MCSs may be set for data carried in the two types of frequency domain units, so that the MCSs can be better applicable to corresponding transmission resources. Optionally, spectral efficiency corresponding to the first MCS may be higher than spectral efficiency corresponding to the second MCS, and the spectral efficiency may be a product of a modulation order and a channel coding code rate. If spectral efficiency of an MCS is high, it indicates that the MCS is a higher-order MCS. In other words, it may be considered that the first MCS is a higher-order MCS relative to the second MCS, and the second MCS is a lower-order MCS. In other words, because the bandwidth of the second-type frequency domain unit is large, a lower-order MCS may be used in the second-type frequency domain unit, to improve data transmission reliability.

In the first indication manner, a quantity of frequency domain units occupied by the reserved resource in the first-type time domain unit may be equal to a quantity of frequency domain units occupied by the reserved resource in the second-type time domain unit. However, considering that the bandwidth of the first-type frequency domain unit is different from the bandwidth of the second-type frequency domain unit, in this embodiment of this application, it is also considered that the quantity of frequency domain units occupied by the reserved resource in the first-type time domain unit may not be equal to the quantity of frequency domain units occupied by the reserved resource in the second-type time domain unit, so that data transmission is more flexible. In view of this, another optional implementation is provided, that is, a second indication manner of the side control information. In this indication manner, the quantity of frequency domain units occupied by the reserved resource in the first-type time domain unit may not be equal to the quantity of frequency domain units occupied by the reserved resource in the second-type time domain unit.

In the second indication manner, for example, in addition to the FRIV, the frequency domain unit occupied by the reserved resource in the K time domain units is indicated with reference to second indication information. For example, side control information sent in a type of time domain unit (the first-type time domain unit or the second-type time domain unit) may include the second indication information. The second indication information may indicate a quantity of frequency domain units occupied by the reserved resource in the other type of time domain unit (the second-type time domain unit or the first-type time domain unit). For example, the first UE sends the side control information by using the first time domain unit in the first resource pool. If the first time domain unit is the first-type time domain unit, the K time domain units include a second time domain unit, and the second time domain unit is the second-type time domain unit, the second indication information included in the side control information may indicate a quantity of frequency domain units occupied by the reserved resource in the second time domain unit. Alternatively, the first UE sends the side control information by using the first time domain unit in the first resource pool. If the first time domain unit is the second-type time domain unit, the K time domain units include a third time domain unit, and the third time domain unit is the first-type time domain unit, the second indication information included in the side control information may indicate a quantity of frequency domain units occupied by the reserved resource in the third time domain unit.

For example, in FIG. 8, the first UE sends SCI in a first-type slot, the SCI indicates that a second-type slot occupied by the reserved resource is a slot 5 in FIG. 8, and an FRIV included in the SCI indicates that the reserved resource occupies a subchannel 2 and a subchannel 3 in the slot 5. The SCI further includes second indication information, and the second indication information indicates that a quantity of subchannels occupied by the reserved resource in the second-type slot is 1. In this case, the first UE may determine that the reserved resource occupies the subchannel 2 or the subchannel 3 in the slot 5. There may be a corresponding manner to determine whether the reserved resource occupies the subchannel 2 or the subchannel 3 in the slot 5.

It may be specified that a quantity of frequency domain units occupied by the reserved resource in a time domain unit of a type different from that of a time domain unit in which the SCI is located is less than a quantity of frequency domain units occupied by the reserved resource in a time domain unit of a type the same as that of the time domain unit in which the SCI is located. A frequency domain unit with a smallest sequence number indicated by the FRIV may be used as a frequency domain unit occupied by the reserved resource in the time domain unit of a type different from that of the time domain unit in which the SCI is located. FIG. 8 is still used as an example. The quantity of frequency domain units occupied by the reserved resource in the time domain unit (the second-type slot) of the type different from that of the time domain unit in which the SCI is located is 1, and is less than a quantity 2 of frequency domain units occupied by the reserved resource in a time domain unit (the first-type slot) of the type the same as that of the time domain unit in which the SCI is located, and a subchannel with a smallest sequence number indicated by the FRIV is a subchannel 2. The first UE may determine that the reserved resource occupies the subchannel 2 in the second-type slot (for example, the slot 5).

Alternatively, it may be specified that a quantity of frequency domain units occupied by the reserved resource in a time domain unit of a type different from that of a time domain unit in which the SCI is located is less than a quantity of frequency domain units occupied by the reserved resource in a time domain unit of a type the same as that of the time domain unit in which the SCI is located. A frequency domain unit with a largest sequence number indicated by the FRIV may be used as a frequency domain unit occupied by the reserved resource in the time domain unit of a type different from that of the time domain unit in which the SCI is located. FIG. 8 is still used as an example. The quantity of frequency domain units occupied by the reserved resource in the time domain unit (the second-type slot) of the type different from that of the time domain unit in which the SCI is located is 1, and is less than a quantity 2 of frequency domain units occupied by the reserved resource in the time domain unit (the first-type slot) of the type the same as that of the time domain unit in which the SCI is located, and a subchannel with a largest sequence number indicated by the FRIV is a subchannel 3. The first UE may determine that the reserved resource occupies the subchannel 3 in the second-type slot (for example, the slot 5).

For another example, in FIG. 8, the first UE sends SCI in a second-type slot, the SCI indicates that a first-type slot occupied by the reserved resource is a slot 6 in FIG. 8, and an FRIV included in the SCI indicates that the reserved resource occupies a subchannel 2 in the slot 6. The SCI further includes second indication information, and the second indication information indicates that a quantity of subchannels occupied by the reserved resource in the first-type slot is 2. In this case, the first UE may determine that the reserved resource occupies the subchannel 2 and a subchannel 3 in the slot 6, or occupies a subchannel 1 and the subchannel 2 in the slot 6. There may be a corresponding manner of determining subchannels that are occupied by the reserved resource in the slot 6.

It may be specified that a quantity of frequency domain units occupied by the reserved resource in a time domain unit of a type different from that of a time domain unit in which the SCI is located is greater than a quantity of frequency domain units occupied by the reserved resource in a time domain unit of a type the same as that of the time domain unit in which the SCI is located. A frequency domain unit with a smallest sequence number indicated by the FRIV may be used as a start frequency domain unit occupied by the reserved resource in the time domain unit of a type different from that of the time domain unit in which the SCI is located. For example, an index of the frequency domain unit with the smallest sequence number indicated by the FRIV is j, where $0 \leq j < N$. The quantity of frequency domain units occupied by the reserved resource in the time domain unit of the type different from that of the time domain unit in which the SCI is located is Q, where $0 < Q \leq N$. If $j+Q \leq N$, indexes of frequency domain units occupied by the reserved resource in the time domain unit of the type different from that of the time domain unit in which the SCI is located are j to j+Q-1. If $j+Q > N$, indexes of frequency domain units occupied by the reserved resource in the time domain unit of the type different from that of the time domain unit in which the SCI is located are N-Q to N-1, or j to N-1 and 0 to Q-(N-j)-1. FIG. 8 is still used as an example. The quantity of frequency domain units occupied by the reserved resource in the time domain unit (the first-type slot) of the type different from that of the time domain unit in which the SCI is located is 2, and is greater than a quantity 1 of frequency domain units occupied by the reserved resource in the time domain unit (the first-type slot) of the type the same as that of the time domain unit in which the SCI is located, and a subchannel indicated by the FRIV is a subchannel 2. The first UE may determine that the reserved resource occupies the subchannel 2 and the subchannel 3 in the first-type slot (for example, the slot 6).

Alternatively, it may be specified that a quantity of frequency domain units occupied by the reserved resource in a time domain unit of a type different from that of a time domain unit in which the SCI is located is greater than a quantity of frequency domain units occupied by the reserved resource in a time domain unit of a type the same as that of the time domain unit in which the SCI is located. A frequency domain unit with a smallest sequence number indicated by the FRIV may be used as an end frequency domain unit occupied by the reserved resource in the time domain unit of a type different from that of the time domain unit in which the SCI is located. For example, an index of the frequency domain unit with the smallest sequence number indicated by the FRIV is j, where $0 \leq j < N$. The quantity of frequency domain units occupied by the reserved resource in the time domain unit of the type different from that of the time domain unit in which the SCI is located is Q, where $0 < Q \leq N$. If $j-Q+1 \geq 0$, indexes of frequency domain units occupied by the reserved resource in the time domain unit of the type different from that of the time domain unit in which the SCI is located are j-Q+1 to j. If $j-Q+1 < 0$, indexes of frequency domain units occupied by the reserved resource in the time domain unit of the type different from that of the time domain unit in which the SCI is located are 0 to Q-1, or 0 to j and N-(Q-(j+1)) to N-1. FIG. 8 is still used as an example. The quantity of frequency domain units occupied by the reserved resource in the time domain unit (the first-type slot) of the type different from that of the time domain unit in which the SCI is located is 2, and is greater than a quantity 1 of frequency domain units occupied by the reserved resource in the time domain unit (the first-type slot) of the type the same as that of the time domain unit in which the SCI is located, and a subchannel indicated by the FRIV is a subchannel 2. The first UE may determine that the reserved resource occupies the subchannel 1 and the subchannel 2 in the first-type slot (for example, the slot 6).

In S703, the first UE may send the side control information, where the side control information may schedule the one or more TBs corresponding to the first data. Therefore, optionally, the method may further include S704: The first UE sends the at least one TB corresponding to the first data in a first frequency domain unit in a third time domain unit. Correspondingly, the second UE receives the at least one TB corresponding to the first data in the first frequency domain unit in the third time domain unit. The third time domain unit and the first time domain unit may be a same time domain unit, or may be different time domain units. The second UE may receive the side control information, and the receiving end of the first data may be the second UE, or may be another UE. In this embodiment of this application, the second UE is used as an example.

After receiving at least one TB corresponding to the first data, the second UE may send feedback information through a PSFCH. The feedback information is, for example, a HARQ feedback, such as an ACK or a NACK, to indicate that the at least one TB corresponding to the first data is successfully received or fails to be received. For descriptions of content such as the PSFCH resource, refer to the embodiment shown in FIG. 4.

In this embodiment of this application, although the first resource pool includes the first-type time domain unit and the second-type time domain unit, quantities of frequency domain units corresponding to different types of time domain units are the same. Therefore, both a PSFCH resource that is associated with the second-type time domain unit and a PSFCH resource that is not associated with the second-type time domain unit are associated with a same quantity of frequency domain units. FIG. 8 is used as an example. A PSFCH resource in a slot 7 is a PSFCH resource associated with the second-type time domain unit (the slot 7 is associated with a slot 2 to a slot 5, and the slot 5 is the second-type time domain unit). The PSFCH resource in the slot 7 may be associated with 12 frequency domain units. A PSFCH resource in a slot 11 is a PSFCH resource that is not associated with the second-type time domain unit (the slot 11 is associated with a slot 6 to a slot 9, which are all first-type time domain units). The PSFCH resource in the slot 11 may also be associated with 12 frequency domain units. In this embodiment of this application, the PSFCH resource may be divided into a plurality of feedback resource unit sets in frequency domain. A quantity of feedback resource unit sets obtained through division may be equal to a quantity of frequency domain units associated with the PSFCH resource. In this case, the frequency domain units associated with the PSFCH resource may be in one-to-one correspondence with the feedback resource unit sets.

For example, the first resource pool includes a fourth time domain unit, the fourth time domain unit includes a PSFCH resource, the fourth time domain unit is associated with L1 time domain units, and the L1 time domain units include the second-type time domain unit, or do not include the second-type time domain unit. The PSFCH resource may be divided into H1 feedback resource unit sets in frequency domain, and the H1 feedback resource unit sets are in one-to-one correspondence with frequency domain units in the L1 time domain units. Both L1 and H1 are positive integers. FIG. 8 is used as an example. The third time domain unit is, for example, the slot 7 or the slot 11, L1=4, and H1=12.

A PSFCH resource in a time domain unit is divided into a plurality of feedback resource unit sets in frequency domain. Each feedback resource unit set may include one or more feedback resource units. The feedback resource unit is, for example, a PRB. In this case, the feedback resource unit set may also be understood as a PRB set.

If the second UE is to send the feedback information, the second UE is to determine a feedback resource unit used to send the feedback information. Therefore, optionally, the method may further include S705: The second UE determines the feedback resource unit used to send the feedback information. In addition, the first UE may also determine a feedback resource unit used to receive the feedback information. A manner of determining the feedback resource unit by the first UE is similar to that of determining the feedback resource unit by the second UE.

As described above, the first UE sends, in the first frequency domain unit in the third time domain unit, the at least one TB corresponding to the first data. For example, a PSFCH resource associated with the third time domain unit is located in the fourth time domain unit, the fourth time domain unit is associated with L1 time domain units in total, and the third time domain unit belongs to the L1 time domain units.

For example, if the first frequency domain unit in the third time domain unit corresponds to a first feedback resource unit set in the H1 feedback resource unit sets, the first UE or the second UE may determine, from the first feedback resource unit set, a feedback resource unit used to transmit the feedback information of the at least one TB corresponding to the first data. For example, the determined feedback resource unit is a first feedback resource unit. For a manner of determining the first feedback resource unit by the first UE or the second UE, refer to the manner of determining the first feedback resource unit when e=1 in the embodiment shown in FIG. 4. Details are not described again.

Optionally, the method may further include S706: The second UE sends the feedback information of the at least one TB corresponding to the first data in the first feedback resource unit in the fourth time domain unit. Correspondingly, the first UE receives the feedback information in the first feedback resource unit in the fourth time domain unit. The first UE and the second UE may determine the first feedback resource unit in a same manner (as described above). Therefore, the first UE can correctly receive the feedback information.

In this embodiment of this application, the first-type time domain unit included in the first resource pool may correspond to the N first-type frequency domain units, the second-type time domain unit may correspond to the N second-type frequency domain units, and the bandwidth of the second-type frequency domain unit may be greater than the bandwidth of the first-type frequency domain unit. In other words, in the time domain units included in the first resource pool, the first resource pool may include frequency domain units of different bandwidths in different types of time domain units. For example, the first resource pool may include all available frequency domain resources in a UL slot, and may also include all available frequency domain resources in an SBFD slot. This reduces a waste of resources and improves resource utilization. In addition, in this embodiment of this application, a quantity of frequency domain units corresponding to the first-type time domain unit is equal to a quantity of frequency domain units corresponding to the second-type time domain unit. Therefore, there is no need to make excessive changes to side control information, a feedback mechanism, and the like, and this can be better compatible with the conventional technology.

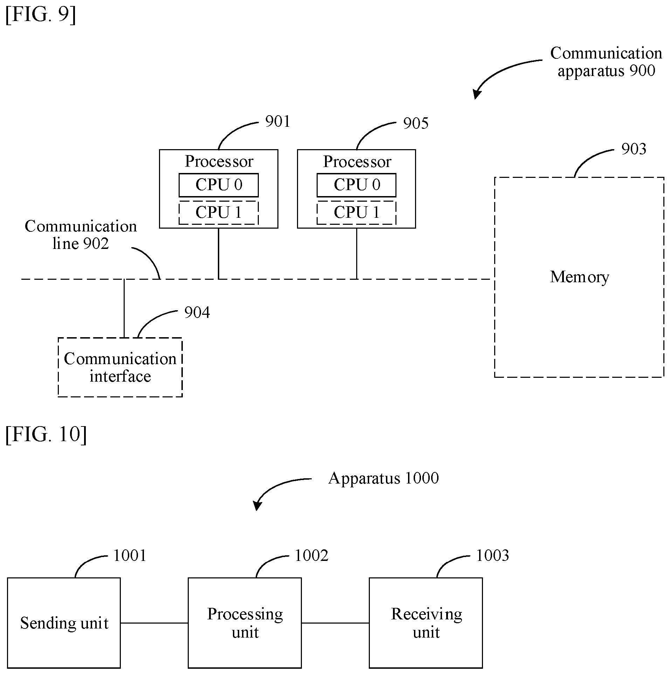

FIG. 9 is a diagram of a structure of a communication apparatus according to an embodiment of this application. The communication apparatus 900 may be the first UE or a circuit system of the first UE in the embodiment shown in FIG. 4, and is configured to implement the method corresponding to the first UE in the foregoing method embodiment. Alternatively, the communication apparatus 900 may be the second UE or a circuit system of the second UE in the embodiment shown in FIG. 4, and is configured to implement the method corresponding to the second UE in the foregoing method embodiment. Alternatively, the communication apparatus 900 may be the first UE or a circuit system of the first UE in the embodiment shown in FIG. 7, and is configured to implement the method corresponding to the first UE in the foregoing method embodiment. Alternatively, the communication apparatus 900 may be the second UE or a circuit system of the second UE in the embodiment shown in FIG. 7, and is configured to implement the method corresponding to the second UE in the foregoing method embodiment. For specific functions, refer to descriptions of the foregoing method embodiments. For example, a circuit system is a chip system.

The communication apparatus 900 includes at least one processor 901. The processor 901 may be configured to perform internal processing of the apparatus, to implement a specific control processing function. Optionally, the processor 901 includes instructions. Optionally, the processor 901 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 900 includes one or more memories 903, configured to store instructions. Optionally, the memory 903 may further store data. The processor and the memory may be separately disposed, or may be integrated together.

Optionally, the communication apparatus 900 includes a communication line 902 and at least one communication interface 904. Because the memory 903, the communication line 902, and the communication interface 904 are all optional, the memory 903, the communication line 902, and the communication interface 904 are all represented by dashed lines in FIG. 9.

Optionally, the communication apparatus 900 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 900 by using an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 901 may include a general-purpose central processing unit (central processing unit, CPU), a microprocessor, an application-specific integrated circuit (application-specific integrated circuit, ASIC), or one or more integrated circuits configured to control program execution of the solutions in this application.

The communication line 902 may include a path for transmitting information between the foregoing components.

The communication interface 904 uses any transceiver-type apparatus, to communicate with another device or a communication network such as the Ethernet, a radio access network (radio access network, RAN), a wireless local area network (wireless local area network, WLAN), or a wired access network.

The memory 903 may be a read-only memory (read-only memory, ROM) or another type of static storage device that can store static information and instructions, or a random access memory (random access memory, RAM) or another type of dynamic storage device that can store information and instructions. Alternatively, the memory 903 may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in an instruction or data structure form and that can be accessed by a computer. However, this is not limited thereto. The memory 903 may exist independently, and is connected to the processor 901 through the communication line 902. Alternatively, the memory 903 may be integrated with the processor 901.

The memory 903 is configured to store computer-executable instructions for performing the solutions in this application, and the processor 901 controls execution. The processor 901 is configured to execute the computer-executable instruction stored in the memory 903, to implement the communication method provided in the foregoing embodiments of this application.

Optionally, the computer-executable instructions in this embodiment of this application may also be referred to as application program code. This is not specifically limited in this embodiment of this application.

During specific implementation, in an embodiment, the processor 901 may include one or more CPUs, for example, a CPU 0 and a CPU 1 in FIG. 9.

During specific implementation, in an embodiment, the communication apparatus 900 may include a plurality of processors, for example, the processor 901 and a processor 905 in FIG. 9. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 9 is a chip, for example, a chip of the first UE or a chip of the second UE, the chip includes the processor 901 (and may further include a processor 905), the communication line 902, and the communication interface 904, and optionally, may further include the memory 903. For example, the communication interface 904 may be an input interface, a pin, or a circuit. The memory 903 may be a register, a cache, or the like. The processor 901 and the processor 905 each may be a general-purpose CPU, a microprocessor, an ASIC, or one or more integrated circuits configured to control program execution of the method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each functional module is obtained through division based on each corresponding function, FIG. 10 is a diagram of an apparatus. The apparatus 1000 may be the first UE or the second UE in the foregoing method embodiments, or a chip in the first UE or a chip in the second UE. The apparatus 1000 includes a sending unit 1001, a processing unit 1002, and a receiving unit 1003.

It should be understood that the apparatus 1000 may be configured to implement the steps performed by the first UE or the second UE in the method in embodiments of this application. For related features, refer to the foregoing embodiments. Details are not described herein again.

Optionally, functions/implementation processes of the sending unit 1001, the receiving unit 1003, and the processing unit 1002 in FIG. 10 may be implemented by the processor 901 in FIG. 9 by invoking the computer-executable instructions stored in the memory 903. Alternatively, a function/an implementation process of the processing unit 1002 in FIG. 10 may be implemented by the processor 901 in FIG. 9 by invoking the computer-executable instructions stored in the memory 903, and functions/implementation processes of the sending unit 1001 and the receiving unit 1003 in FIG. 10 may be implemented by the communication interface 904 in FIG. 9.

Optionally, when the apparatus 1000 is a chip or a circuit, functions/implementation processes of the sending unit 1001 and the receiving unit 1003 may alternatively be implemented by using a pin, a circuit, or the like.

This application further provides a computer-readable storage medium. The computer-readable storage medium stores a computer program or instructions. When the computer program or the instructions are run, the method performed by the first UE or the second UE in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk drive, a ROM, a RAM, a magnetic disk, or an optical disc.

This application further provides a computer program product. The computer program product includes computer program code. When the computer program code is run on a computer, the computer is enabled to perform the method performed by the first UE or the second UE in any one of the foregoing method embodiments.

An embodiment of this application further provides a processing apparatus, including a processor and an interface. The processor is configured to perform the method performed by the first UE or the second UE in any one of the foregoing method embodiments.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive, (solid-state disk, SSD)), or the like.

Various illustrative logic units and circuits described in embodiments of this application may implement or operate the described functions by a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk drive, a removable magnetic disk, a CD-ROM, or any other form of storage medium in the art. For example, the storage medium may connect to a processor so that the processor may read information from the storage medium and write information to the storage medium. Alternatively, the storage medium may be integrated into a processor. The processor and the storage medium may be disposed in an ASIC, and the ASIC may be disposed in a terminal device. Alternatively, the processor and the storage medium may be disposed in different parts of a terminal device.

These computer program instructions may also be loaded onto a computer or another programmable data processing device, so that a series of operations and steps are performed on the computer or the another programmable device, thereby generating computerimplemented processing. Therefore, the instructions executed on the computer or the another programmable device provide steps for implementing a specific function in one or more processes in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to cover any or all modifications, variations, combinations, or equivalents in the scope of embodiments of this application. Apparently, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

**Claims**

1. A communication method, applied to a terminal device, wherein the method comprises:
   determining configuration information, wherein the configuration information is used to configure a first resource pool, the first resource pool is used for information transmission between the terminal device and another terminal device, the first resource pool comprises M1 first-type time domain units and M2 second-type time domain units, both M1 and M2 are positive integers, each of the M1 first-type time domain units corresponds to N1 first-type frequency domain units in the first resource pool, each of the M2 second-type time domain units corresponds to N2 second-type frequency domain units in the first resource pool, both N1 and N2 are positive integers, a bandwidth of each first-type frequency domain unit is the same as a bandwidth of each second-type frequency domain unit, and N2 is greater than N1.

2. The method according to claim 1, wherein the configuration information comprises one or more of the following:

information about an index set of the M1 first-type time domain units;
information about an index set of the M2 second-type time domain units;
frequency domain location information of the N1 first-type frequency domain units;
frequency domain location information of the N2 second-type frequency domain units;
a value of N1;
a value of N2; or
a quantity of physical resource blocks PRBs comprised in each first-type frequency domain unit or each second-type frequency domain unit.

3. The method according to claim 1 or 2, wherein the determining configuration information comprises:

receiving the configuration information from a network device; or
determining the preconfigured configuration information.

4. The method according to any one of claims 1 to 3, wherein the method further comprises:
sending or receiving side control information in a first time domain unit in the first resource pool, wherein the side control information comprises a frequency resource indicator value, the frequency resource indicator value indicates a frequency domain unit occupied by a reserved resource in K time domain units, a quantity of bits occupied by the frequency resource indicator value is determined based on a first parameter, and K is a positive integer.

5. The method according to claim 4, wherein the first parameter is N2.

6. The method according to claim 4, wherein

if the first time domain unit belongs to the M1 first-type time domain units, the first parameter is N1; or
if the first time domain unit belongs to the M2 second-type time domain units, the first parameter is N2.

7. The method according to claim 6, wherein the first time domain unit belongs to the M1 first-type time domain units, the K time domain units comprise a second time domain unit, the second time domain unit belongs to the M2 second-type time domain units, the side control information further indicates information about a first frequency domain unit set occupied by the reserved resource in the second time domain unit, the N2 second-type frequency domain units are divided into at least two frequency domain unit sets, each frequency domain unit set comprises one or more second-type frequency domain units, and the first frequency domain unit set is one of the at least two frequency domain unit sets.

8. The method according to any one of claims 1 to 3, wherein the method further comprises:
sending or receiving side control information in a first time domain unit in the first resource pool, wherein the side control information comprises K pieces of first indication information, K is a positive integer, and the K pieces of first indication information indicate a frequency domain unit occupied by a reserved resource in K time domain units.

9. The method according to claim 8, wherein each of the K pieces of first indication information is a bitmap.

10. The method according to any one of claims 4 to 9, wherein the method further comprises:

sending or receiving first data in a first frequency domain unit in a third time domain unit, wherein a fourth time domain unit comprises H1 feedback resource unit sets used to send or receive feedback information, the H1 feedback resource unit sets are in one-to-one correspondence with frequency domain units in L1 time domain units, the third time domain unit belongs to the L1 time domain units, the first frequency domain unit in the third time domain unit corresponds to a first feedback resource unit set in the H1 feedback resource unit sets, and both H1 and L1 are positive integers; and
determining a first feedback resource unit from the first feedback resource unit set, wherein the first feedback resource unit is used to receive or send feedback information of the first data.

**11.** The method according to claim 10, wherein

the L1 time domain units comprise none of the M2 second-type time domain units; or
the L1 time domain units comprise at least one of the M2 second-type time domain units, wherein
H1 existing when the L1 time domain units comprise none of the M2 second-type time domain units is less than H1
existing when the L1 time domain units comprise at least one of the M2 second-type time domain units.

**12.** The method according to claim 11, wherein the determining a first feedback resource unit from the first feedback resource unit set comprises:
determining, based on an identifier related to the first data, one or more of an index of the first feedback resource unit, an index of a frequency domain subunit corresponding to the first feedback resource unit, a cyclic shift of a sequence corresponding to the first feedback resource unit, or an orthogonal cover code OCC corresponding to the first feedback resource unit, wherein the first feedback resource unit comprises at least two time domain subunits in time domain.

**13.** The method according to claim 12, wherein the OCC is a Walsh code sequence or a discrete Fourier transform sequence.

**14.** The method according to claim 12 or 13, wherein the L1 time domain units comprise one or more of the M2 second-type time domain units, and the fourth time domain unit belongs to the M1 first-type time domain units.

**15.** A communication method, applied to a terminal device, wherein the method comprises:
determining configuration information, wherein the configuration information is used to configure a first resource pool, the first resource pool is used for information transmission between the terminal device and another terminal device, the first resource pool comprises M1 first-type time domain units and M2 second-type time domain units, both M1 and M2 are positive integers, each of the M1 first-type time domain units corresponds to N first-type frequency domain units, each of the M2 second-type time domain units corresponds to N second-type frequency domain units, N is a positive integer, and a bandwidth of each first-type frequency domain unit is less than a bandwidth of each second-type frequency domain unit.

**16.** The method according to claim 15, wherein the configuration information comprises one or more of the following:

information about an index set of the M1 first-type time domain units;
information about an index set of the M2 second-type time domain units;
frequency domain location information of the N first-type frequency domain units;
frequency domain location information of the N second-type frequency domain units;
a value of N;
a quantity of PRBs comprised in each first-type frequency domain unit; or
a quantity of PRBs comprised in each second-type frequency domain unit.

**17.** The method according to claim 15 or 16, wherein the determining configuration information comprises:

receiving the configuration information from a network device; or
determining the preconfigured configuration information.

**18.** The method according to any one of claims 15 to 17, wherein the method further comprises:
sending or receiving side control information, wherein the side control information comprises a frequency resource indicator value, the frequency resource indicator value indicates a frequency domain unit occupied by a reserved resource in K time domain units, K is a positive integer, the side control information further indicates a first modulation and coding scheme MCS and a second MCS, the first MCS is applicable to a first-type time domain unit in the K time domain units, the second MCS is applicable to a second-type time domain unit in the K time domain units, and the first MCS is different from the second MCS.

**19.** The method according to claim 18, wherein spectral efficiency corresponding to the first MCS is higher than spectral efficiency corresponding to the second MCS.

**20.** The method according to any one of claims 15 to 17, wherein the method further comprises:

sending or receiving side control information in a first time domain unit in the first resource pool, wherein the side control information comprises a frequency resource indicator value, the frequency resource indicator value indicates a frequency domain unit occupied by a reserved resource in K time domain units, and K is a positive integer, wherein

the first time domain unit belongs to the M1 first-type time domain units, the K time domain units comprise a second time domain unit, the second time domain unit belongs to the M2 second-type time domain units, and the side control information further indicates a quantity of frequency domain units occupied by the reserved resource in the second time domain unit; or

the first time domain unit belongs to the M2 second-type time domain units, the K time domain units comprise a third time domain unit, the third time domain unit belongs to the M2 first-type time domain units, and the side control information further indicates a quantity of frequency domain units occupied by the reserved resource in the third time domain unit.

21. A communication apparatus, comprising a processor and a memory, wherein the memory is coupled to the processor, and the processor is configured to perform the method according to any one of claims 1 to 14, or is configured to perform the method according to any one of claims 15 to 20.

22. A computer-readable storage medium, wherein the computer-readable storage medium is configured to store a computer program; and when the computer program is run on a computer, the computer is enabled to perform the method according to any one of claims 1 to 14, or the computer is enabled to perform the method according to any one of claims 15 to 20.

23. A chip system, wherein the chip system comprises:
a processor and an interface, wherein the processor is configured to invoke instructions from the interface and run the instructions; and when executing the instructions, the processor implements the method according to any one of claims 1 to 14, or implements the method according to any one of claims 15 to 20.

24. A computer program product, wherein the computer program product comprises a computer program; and when the computer program is run on a computer, the computer is enabled to perform the method according to any one of claims 1 to 14, or the computer is enabled to perform the method according to any one of claims 15 to 20.

[FIG. 1]

| D | D | D | D | U | D | D | D | D | U |
|---|---|---|---|---|---|---|---|---|---|

Slot

Including an SL resource

[FIG. 2]

| D | D | D | D | U | D | D | D | D | U |
|---|---|---|---|---|---|---|---|---|---|
| U | U | U | U | U | U | U | U | U | U |
| D | D | D | D | U | D | D | D | D | U |

SL resource pool

SBFD slot          UL slot

[FIG. 3]

Network device

| UE 1 | ⟷ | UE 2 |

[FIG. 4]

First UE

S401: Determine configuration information, where the configuration information is used to configure a first resource pool, the first resource pool includes M1 first-type time domain units and M2 second-type time domain units, each of the M1 first-type time domain units corresponds to N1 first-type frequency domain units, each of the M2 first-type time domain units corresponds to N2 second-type frequency domain units, and N2 is greater than N1

Second UE

S402: Determine the configuration information, where the configuration information is used to configure the first resource pool, the first resource pool includes the M1 first-type time domain units and the M2 second-type time domain units, each of the M1 first-type time domain units corresponds to the N1 first-type frequency domain units, each of the M2 second-type time domain units corresponds to the N2 second-type frequency domain units, and N2 is greater than N1

S403: Side control information (in a first time domain unit)

S404: First data (in a first frequency domain unit in a third time domain unit)

S405: Determine a feedback resource unit used to send feedback information

S406: Feedback information of the first data (in a first feedback resource unit in a fourth time domain unit)

[FIG. 5]

[FIG. 6]

[FIG. 7]

```
┌─────────────┐                          ┌──────────────┐
│  First UE   │                          │  Second UE   │
└─────────────┘                          └──────────────┘
```

```
┌────────────────────────────┐          ┌────────────────────────────┐
│ S701: Determine            │          │ S702: Determine the        │
│ configuration information, │          │ configuration information, │
│ where the configuration    │          │ where the configuration    │
│ information is used to      │          │ information is used to      │
│ configure a first resource │          │ configure the first resource│
│ pool, the first resource    │          │ pool, the first resource    │
│ pool includes M1 first-type │          │ pool includes the M1 first- │
│ time domain units and M2    │          │ type time domain units and  │
│ second-type time domain     │          │ the M2 second-type time     │
│ units, the M1 first-type    │          │ domain units, the M1 first- │
│ time domain units correspond│          │ type time domain units      │
│ to N first-type frequency   │          │ correspond to the N first-  │
│ domain units, the M2        │          │ type frequency domain units,│
│ second-type time domain     │          │ the M2 second-type time     │
│ units correspond to N       │          │ domain units correspond to  │
│ second-type frequency       │          │ the N second-type frequency │
│ domain units, and a         │          │ domain units, and the       │
│ bandwidth of the first-type │          │ bandwidth of the first-type │
│ frequency domain unit is    │          │ frequency domain unit is    │
│ less than a bandwidth of    │          │ less than the bandwidth of  │
│ the second-type frequency   │          │ the second-type frequency   │
│ domain unit                 │          │ domain unit                 │
└────────────────────────────┘          └────────────────────────────┘
```

S703: Side control information

S704: First data (in a first frequency domain unit in a third time domain unit)

```
┌────────────────────────────┐
│ S705: Determine a feedback │
│ resource unit used to send │
│ feedback information       │
└────────────────────────────┘
```

S706: Feedback information of the first data (in a first feedback resource unit in a fourth time domain unit)

[FIG. 8]

| 1 | 2 | 3 | 4 | 5 | 6 | 7 | 8 | 9 | 10 | 11 | 12 | 13 | 14 | 15 |

PSFCH resource

[FIG. 9]

Communication
apparatus 900

901          905          903

Processor        Processor
CPU 0            CPU 0
CPU 1            CPU 1                     Memory

Communication
line 902

904

Communication
interface

[FIG. 10]

Apparatus 1000

1001          1002          1003

Sending unit    Processing      Receiving
unit            unit

**INTERNATIONAL SEARCH REPORT**

| International application No. |
|---|
| **PCT/CN2023/128323** |

### A. CLASSIFICATION OF SUBJECT MATTER

H04W72/0446(2023.01)i

According to International Patent Classification (IPC) or to both national classification and IPC

### B. FIELDS SEARCHED

Minimum documentation searched (classification system followed by classification symbols)

IPC:H04W72/-

Documentation searched other than minimum documentation to the extent that such documents are included in the fields searched

Electronic data base consulted during the international search (name of data base and, where practicable, search terms used)

CNTXT; WPABSC; ENTXTC; CNKI: 侧链, 侧行, 旁链, 第二, 第一, 频带, 频域, 时域, 单元, 资源, 子带, 子信道, 带宽, 不同, 不相同, 大于, 小于, 个, 数量, 上行, SBFD WPABS; ENTXT; DWPI; 3GPP; IEEE: sidelink, time, frequency, domain, subchannel, bandwidth, different, first, second, greater, higher, less, SBFD, UL

### C. DOCUMENTS CONSIDERED TO BE RELEVANT

| Category* | Citation of document, with indication, where appropriate, of the relevant passages | Relevant to claim No. |
|---|---|---|
| X | CN 107889067 A (HUAWEI TECHNOLOGIES CO., LTD.) 06 April 2018 (2018-04-06) description, paragraphs [0138]-[0284], and figures 8-12 | 1-24 |
| A | CN 110431896 A (GUANGDONG OPPO MOBILE TELECOMMUNICATIONS CORP., LTD.) 08 November 2019 (2019-11-08) entire document | 1-24 |
| A | CN 114793358 A (BEIJING UNISOC COMMUNICATION TECHNOLOGY CO., LTD.) 26 July 2022 (2022-07-26) entire document | 1-24 |
| A | WO 2022226739 A1 (BEIJING XIAOMI MOBILE SOFTWARE CO., LTD.) 03 November 2022 (2022-11-03) entire document | 1-24 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 January 2024** | **25 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| | International application No. |
|---|---|
| | **PCT/CN2023/128323** |

| Patent document cited in search report | | | Publication date (day/month/year) | Patent family member(s) | | | Publication date (day/month/year) |
|---|---|---|---|---|---|---|---|
| CN | 107889067 | A | 06 April 2018 | WO | 2018059271 | A1 | 05 April 2018 |
| | | | | CN | 107889067 | B | 20 March 2020 |
| CN | 110431896 | A | 08 November 2019 | JP | 2020516116 | A | 28 May 2020 |
| | | | | JP | 6900501 | B2 | 07 July 2021 |
| | | | | US | 2020092872 | A1 | 19 March 2020 |
| | | | | US | 10952207 | B2 | 16 March 2021 |
| | | | | WO | 2018170673 | A1 | 27 September 2018 |
| | | | | KR | 20190127769 | A | 13 November 2019 |
| | | | | KR | 102303022 | B1 | 17 September 2021 |
| | | | | EP | 3592065 | A1 | 08 January 2020 |
| | | | | EP | 3592065 | A4 | 18 March 2020 |
| | | | | EP | 3592065 | B1 | 01 September 2021 |
| | | | | IN | 201917038950 | A | 13 December 2019 |
| | | | | CN | 110431896 | B | 09 April 2021 |
| CN | 114793358 | A | 26 July 2022 | WO | 2022161506 | A1 | 04 August 2022 |
| WO | 2022226739 | A1 | 03 November 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211400750

- CN 202211630768